# EUROPEAN PATENT APPLICATION

(11) **EP 2 104 028 A2**
(43) Date of publication of application: **23.09.2009**
(21) Application number: 08017983.1
(22) Date of filing: 14.10.2008
(51) Int. Cl.: G06F 3/06

(54) **High availability and low capacity thin provisioning**

(30) Priority: 21.03.2008 US 53514
(71) Applicant: Hitachi Ltd., Chiyoda-ku Tokyo (JP)
(72) Inventor: Kawaguchi, Tomohiro, Tokyo 100-8220 (JP)
(74) Representative: Kirschner, Klaus Dieter

(57) **Abstract**

A data storage system and method for simultaneously providing thin provisioning and high availability. The system includes external storage volume and two storage subsystems coupled together and to external storage volume. Each of storage subsystems includes disk drives and a cache area, each of the storage subsystems includes at least one virtual volume and at least one capacity pool. The virtual volume is allocated from storage elements of the at least one capacity pool. The capacity pool includes the disk drives and at least a portion of external storage volume. The storage elements of the capacity pool are allocated to the virtual volume in response to a data access request. The system further includes a host computer coupled to the storage subsystems and configured to switch input/output path between the storage subsystems. Each of the storage subsystems is adapted to copy received write I/O request to other storage subsystems. Upon receipt of request from another storage subsystem, storage element of the capacity pool of storage subsystem is prevented from being allocated to the virtual volume of that storage subsystem.

## Description

This invention relates generally to computer storage systems and, more particularly, to thin-provisioning in computer storage systems.

Thin provisioning is a mechanism that applies to large-scale centralized computer disk storage systems, storage area networks (SANs), and storage virtualization systems. Thin provisioning allows space to be easily allocated to servers, on a just-enough and just-in-time basis. The term thin-provisioning is used in contrast to fat provisioning that refers to traditional allocation methods on storage arrays where large pools of storage capacity are allocated to individual applications, but remain unused.

In a storage consolidation environment, where many applications are sharing access to the same storage array, thin provisioning allows administrators to maintain a single free space buffer pool to service the data growth requirements of all applications. With thin provisioning, storage capacity utilization efficiency can be automatically increased without heavy administrative overhead. Organizations can purchase less storage capacity up front, defer storage capacity upgrades in line with actual business usage, and save the operating costs associated with keeping unused disk capacity spinning.

Thin provisioning enables over-allocation or over-subscription. Over-allocation or over-subscription is a mechanism that allows server applications to be allocated more storage capacity than has been physically reserved on the storage array itself. This allows flexibility in growth and shrinkage of application storage volumes, without having to predict accurately how much a volume will grow or contract. Physical storage capacity on the array is only dedicated when data is actually written by the application, not when the storage volume is initially allocated.

One method of reducing waste of data storage capacity by thin provisioning is disclosed in U.S. patent No. 7,130,960, to Kano, issued on October 31, 2006, which is incorporated herein in its entirety by this reference. The thin provisioning technology reduces the waste of storage capacity by preventing allocation of storage capacity to an unwritten data area.

On the other hand, high availability is a system design protocol and associated implementation that ensures a certain degree of operational continuity during a given measurement period. Availability refers to the ability of the user community to access the system, whether to submit new work, update or alter existing work, or collect the results of previous work. If a user cannot access the system, the system is said to be unavailable.

One of the solutions for increasing availability is having a synchronous copy system, which is disclosed in Japanese Patent 2007-072538. This technology includes data replication systems in two or more storage subsystems, one or more external storage subsystems and a path changing function in the I/O server. When one storage subsystem stops due to an unexpected failure, for example, due to I/O path disconnection or device error, the I/O server changes the I/O path to the other storage subsystem.

Thin provisioning and high availability are both desirable attributes for a storage system. However, the two methodologies have countervailing aspects.

The inventive methodology is directed to methods and systems that substantially obviate one or more of the above and other problems associated with conventional techniques for thin-provisioning in computer storage systems.

Aspects of the present invention are directed to a method and an apparatus for providing high availability and reducing capacity requirements of storage systems.

According to a main aspect of the invention, a computerized data storage system comprises at least one external volume, two or more storage subsystems comprising a first storage subsystem and a second storage subsystem, the first storage subsystem comprising a first virtual volume and the second storage subsystem comprising a second virtual volume, the first virtual volume and the second virtual volume forming a pair, wherein the first virtual volume and the second virtual volume are thin provisioning volumes; the first virtual volume is operable to allocate a capacity from a first capacity pool associated with the first virtual volume; the second virtual volume is operable to allocate the capacity from a second capacity pool associated with the second virtual volume; and the capacity comprises the at least one external volume; the at least one external volume is shared by the first capacity pool and the second capacity pool; the at least one external volume, the first storage subsystem or the second storage subsystem stores at least one thin provisioning information table; upon execution of a thin provisioning allocation process, if the first storage subsystem has already allocated the capacity from the shared at least one external volume, the second storage subsystem is operable to refer to allocation information and establish a relationship between a virtual volume address and a capacity pool address.

According to a preferred aspect of the invention, each of the first storage subsystem and the second storage subsystem comprises an interface operable to connect at least one disk drive.

According to a preferred aspect of the invention, each of the capacity pool and the second capacity pool is operable to include at least one disk drive.

According to a preferred aspect of the invention, the controller memory stores a volume operation program; an I/O program; a disk access program; a capacity pool management program; a slot operation program; a virtual volume management table; a capacity pool management table; a capacity pool element management table; a capacity pool page management table; a cache management table; and a pair management table; and wherein the cache area is included in the controller memory for storing data.

According to a preferred aspect of the invention, the controller memory additionally stores a RAID group management table; and a capacity pool chunk management table.

According to a preferred aspect of the invention, the host computer comprises a memory comprising a volume management table, and wherein the volume management table provides a pairing of the virtual volumes of the storage subsystems.

According to a preferred aspect of the invention, the volume operation program comprises a volume operation waiting program, a pair create program, and a pair delete program, wherein the pair create program establishes a volume duplication relationship between the virtual volumes of one of the storage subsystems and the virtual volumes of another one of the storage subsystems, and wherein the pair delete program releases the volume duplication relationship.

According to a preferred aspect of the invention, the capacity pool management program comprises a capacity pool page allocation program, wherein the capacity pool allocation program receives a new capacity pool page and a new capacity pool chunk from the capacity pool at one of the storage subsystems and sends requests to other ones of the storage subsystems to omit an arbitrary one of the capacity pool chunks at the other ones of the storage subsystems, wherein the capacity pool garbage collection program performs garbage collection from the capacity pool chunks by removing the capacity pool pages comprising dirty data, and wherein the capacity pool chunk releasing program adds a group of hard disks or a portion of the external volume to the capacity pool responsive to a capacity pool extension request.

According to a preferred aspect of the invention, the capacity pool management program further comprises a capacity pool garbage collection program; and a capacity pool chunk releasing program.

According to a preferred aspect of the invention, the capacity pool management table shows a relationship between each of the capacity pools, the RAID groups associated with each of the capacity pools and a free capacity remaining in each of the capacity pools.

According to a preferred aspect of the invention, the capacity pool element management table shows a relationship between each of the RAID groups, an associated capacity pool, and queues corresponding to a free capacity pool chunk, a used capacity pool chunk, and an omitted capacity pool chunk.

According to a preferred aspect of the invention, the cache management table shows a relationship between each of the cache slots, a corresponding one of the hard disks or a corresponding one of the virtual volumes, an address of the corresponding hard disk, a lock status of the cache slot, a type of queue comprising the cache slot and a corresponding queue pointer, the type of queue being free, clean or dirty.

According to a preferred aspect of the invention, the pair management table shows a relationship between a designated virtual volume on a first storage subsystem and a paired storage subsystem being paired with the first storage subsystem, a paired virtual volume on the paired storage subsystem being paired with the designated virtual volume and a master status or slave status of the designated virtual volume in a pair formed by the designated virtual volume and the paired virtual.

According to a preferred aspect of the invention, the capacity pool management table refers to the capacity pool element management table according to the RAID group, wherein the capacity pool element management table refers to the capacity pool management table according to the capacity pool chunk, wherein the capacity pool element management table refers to the capacity pool chunk management table according to a free chunk queue, a used chunk queue and an omitted chunk queue, wherein a deleted capacity is used in the capacity pool chunk management table for referring one of the capacity pool chunks to another one of the capacity pool chunks, wherein a relationship between the capacity pool element management table and the RAID group management table is fixed, and wherein a relationship between the capacity pool chunks and the capacity pool chunk management table is also fixed.

According to a preferred aspect of the invention, the virtual volume management table refers to an allocated capacity pool chunk being allocated to one of the virtual volumes according to a currently being used chunk information, wherein the capacity pool management table refers to zero or more of the RAID groups, belonging to the disk unit or the external volume, according to a RAID group list, wherein the virtual volume page management table refers to the capacity pool page according to the capacity pool page address and the capacity pool page size, wherein a relationship between the virtual volume and the virtual volume management table is fixed, wherein a relationship between the virtual volume management table and the virtual volume page management table is fixed, and wherein a relationship between the virtual volume page and the virtual volume page management table is fixed.

According to a preferred aspect of the invention, the capacity pool chunk management table refers to the virtual volume according to a virtual volume number, wherein the capacity pool page management table refers to a virtual volume page according to a virtual volume page number, wherein a relationship between the capacity pool chunk and the capacity pool chunk management table is fixed, and wherein the capacity pool page management table is related to the capacity pool page according to entries of the capacity pool page management table.

According to a preferred aspect of the invention, the pair management table relates the virtual volume on one of the storage subsystems to a related virtual volume on another one of the storage subsystems.

According to a preferred aspect of the invention, a same capacity pool page of the external volume is capable of being shared by the paired virtual volumes of the different storage subsystems.

According to a preferred aspect of the invention, the write I/O program is operable to receive a write I/O request from an initiator including the host computer or one of the storage subsystems; locate a free cache slot, among the cache slots, corresponding to a virtual volume comprising the write I/O data by referring to the cache management table; lock the cache slot and write the write I/O data to the cache slot and unlock the cache slot; and if the initiator is a virtual volume having a master status, duplicate the write I/O data to the corresponding slave virtual volume.

According to a preferred aspect of the invention, the read I/O program is operable to receive a read I/O request from the host computer; if read I/O data are available in a cache slot, from among the cache slots, lock the cache slot and send the read I/O data to the host computer; and if the read I/O data are available in one of the hard disks, obtain a free cache slot, from among the cache slots, stage the read I/O data from the hard disk to the free cache slot to obtain a cache slot comprising data, lock the cache slot comprising data and send the read I/O data to the host computer.

According to a preferred aspect of the invention, the cache staging program is operable to transfer the data from the hard disk.

According to a preferred aspect of the invention, the disk flushing program is operable to find a dirty cache slot from among the cache slots; and destage the data from the dirty cache slot.

According to a preferred aspect of the invention, dirty data from a dirty cache slot including the dirty data is sent to the external volume.

According to a main aspect of the invention, a computerized data storage system comprises an external storage volume, two or more storage subsystems coupled together and to the external storage volume, each of the storage subsystems comprising a cache area, each of the storage subsystems comprising at least one virtual volume and at least one capacity pool, the at least one virtual volume being allocated from storage elements of the at least one capacity pool, the at least one capacity pool comprising at least a portion of the external storage volume, wherein the storage elements of the at least one capacity pool are allocated to the virtual volume in response to a data access request; and a host computer operatively coupled to the two or more storage subsystems and operable to switch input/output path between the two or more storage subsystems; wherein, upon receipt of a data write request by a first storage subsystem of the two or more storage subsystems, the first storage subsystem is operable to furnish the received data write request at least to a second storage subsystem of the two or more storage subsystems and wherein, upon receipt of a request from the first storage subsystem, the second storage subsystem is operable to prevent at least one of the storage elements of the at least one capacity pool from being allocated to the at least one virtual volume of the second storage subsystem.

According to a main aspect of the invention, a computer-implemented method for data storage using a host computer coupled to two or more storage subsystems, the two or more storage subsystems coupled together and to an external storage volume, each of the storage subsystems comprising a cache area, each of the storage subsystems comprising at least one virtual volume and at least one capacity pool, the at least one virtual volume being allocated from the at least one capacity pool, the at least one capacity pool comprising at least a portion of the external storage volume, wherein the at least one virtual volume is a thin provisioning volume, comprises pairing a first virtual volume of a first storage subsystem of the two or more storage subsystems and a second virtual volume of a second storage subsystem of the two or more storage subsystems as a master volume and a slave volume; and upon receipt of a request from the first storage subsystem, preventing at least one of the storage elements of the at least one capacity pool of the second storage subsystem from being allocated to the second virtual volume.

According to a preferred aspect of the invention, the at least one capacity pool is operable to include at least one disk drive or external volume.

According to a preferred aspect of the invention, the storage subsystem including the master volume is a master storage subsystem and the storage subsystem including the slave volume is a slave storage subsystem, wherein the cache area includes cache slots for storing the data, and wherein the hard disks include disk slots for storing the data.

According to a main aspect of the invention, a computer-readable medium embodying one or more sequences of instructions, which, when executed by one or more processors, cause the one or more processors to perform a computer-implemented method for data storage using a host computer coupled to two or more storage subsystems, the two or more storage subsystems coupled together and to an external storage volume, each of the storage subsystems comprising a cache area, each of the storage subsystems comprising at least one virtual volume and at least one capacity pool, the at least one virtual volume being allocated from the at least one capacity pool, the at least one capacity pool comprising at least a portion of the external storage volume, wherein the at least one virtual volume is a thin provisioning volume, the method comprising pairing a first virtual volume of a first storage subsystem of the two or more storage subsystems and a second virtual volume of a second storage subsystem of the two or more storage subsystems as a master volume and a slave volume; and upon receipt of a request from the first storage subsystem, preventing at least one of the storage elements of the at least one capacity pool of the second storage subsystem from being allocated to the second virtual volume.

According to one aspect of the invention, a storage system includes a host computer, two or more storage subsystems, and one or more external storage subsystems. The storage subsystems may be referred to as the first storage subsystems. The host computer is coupled to the two or more storage subsystems and can change the I/O path between the storage subsystems. The two or more storage subsystems can access the external storage volumes and treat them as their own storage capacity. These storage subsystems include a thin provisioning function. The thin provisioning function can use the external storage volumes as an element of a capacity pool. The thin provisioning function can also omit the capacity pool area from allocation, when it receives a request from other storage subsystems. The storage subsystems communicate with each other and when the storage subsystems receive a write I/O, they can copy this write I/O to each other.

In accordance with one aspect of the inventive concept, there is provided a computerized data storage system including at least one external volume, two or more storage subsystems incorporating a first storage subsystem and a second storage subsystem, the first storage subsystem including a first virtual volume and the second storage subsystem including a second virtual volume, the first virtual volume and the second virtual volume forming a pair. In the inventive system, the first virtual volume and the second virtual volume are thin provisioning volumes, the first virtual volume is operable to allocate a capacity from a first capacity pool associated with the first virtual volume, the second virtual volume is operable to allocate the capacity from a second capacity pool associated with the second virtual volume, the capacity includes the at least one external volume, the at least one external volume is shared by the first capacity pool and the second capacity pool, the at least one external volume, the first storage subsystem or the second storage subsystem stores at least one thin provisioning information table, and upon execution of a thin provisioning allocation process, if the first storage subsystem has already allocated the capacity from the shared at least one external volume, the second storage subsystem is operable to refer to allocation information and establish a relationship between a virtual volume address and a capacity pool address.

In accordance with another aspect of the inventive concept, there is provided a computerized data storage system including an external storage volume, two or more storage subsystems coupled together and to the external storage volume, each of the storage subsystems including a cache area, each of the storage subsystems including at least one virtual volume and at least one capacity pool, the at least one virtual volume being allocated from storage elements of the at least one capacity pool, the at least one capacity pool comprising at least a portion of the external storage volume. The storage elements of the at least one capacity pool are allocated to the virtual volume in response to a data access request. The inventive storage system further includes a host computer coupled to the two or more storage subsystems and operable to switch input/output path between the two or more storage subsystems. Upon receipt of a data write request by a first storage subsystem of the two or more storage subsystems, the first storage subsystem is configured to furnish the received data write request at least to a second storage subsystem of the two or more storage subsystems and upon receipt of a request from the first storage subsystem, the second storage subsystem is configured to prevent at least one of the storage elements of the at least one capacity pool from being allocated to the at least one virtual volume of the second storage subsystem.

In accordance with yet another aspect of the inventive concept, there is provided a computer-implemented method for data storage using a host computer coupled to two or more storage subsystems, the two or more storage subsystems coupled together and to an external storage volume, each of the storage subsystems including a cache area, each of the storage subsystems including at least one virtual volume and at least one capacity pool, the at least one virtual volume being allocated from the at least one capacity pool. The at least one capacity pool includes at least a portion of the external storage volume. The at least one virtual volume is a thin provisioning volume. The inventive method involves: pairing a first virtual volume of a first storage subsystem of the two or more storage subsystems and a second virtual volume of a second storage subsystem of the two or more storage subsystems as a master volume and a slave volume; and upon receipt of a request from the first storage subsystem, preventing at least one of the storage elements of the at least one capacity pool of the second storage subsystem from being allocated to the second virtual volume.

In accordance with a further aspect of the inventive concept, there is provided a computer-readable medium embodying one or more sequences of instructions, which, when executed by one or more processors, cause the one or more processors to perform a computer-implemented method for data storage using a host computer coupled to two or more storage subsystems. The two or more storage subsystems are coupled together and to an external storage volume. Each of the storage subsystems includes a cache area, at least one virtual volume and at least one capacity pool. The at least one virtual volume being allocated from the at least one capacity pool. The at least one capacity pool includes at least a portion of the external storage volume. In each storage subsystem, the at least one virtual volume is a thin provisioning volume. The inventive method involves pairing a first virtual volume of a first storage subsystem of the two or more storage subsystems and a second virtual volume of a second storage subsystem of the two or more storage subsystems as a master volume and a slave volume; and upon receipt of a request from the first storage subsystem, preventing at least one of the storage elements of the at least one capacity pool of the second storage subsystem from being allocated to the second virtual volume.

Additional aspects related to the invention will be set forth in part in the description which follows, and in part will be obvious from the description, or may be learned by practice of the invention. Aspects of the invention may be realized and attained by means of the elements and combinations of various elements and aspects particularly pointed out in the following detailed description and the appended claims.

Most preferred embodiments of the invention are characterized in the sub-claims.

It is to be understood that both the foregoing and the following descriptions are exemplary and explanatory only and are not intended to limit the claimed invention or application thereof in any manner whatsoever.

The accompanying drawings, which are incorporated in and constitute a part of this specification exemplify the embodiments of the present invention and, together with the description, serve to explain and illustrate principles of the inventive technique. Specifically:

Figure 1 illustrates a storage system according to aspects of the present invention.

Figure 2 illustrates an exemplary memory for a host computer of a storage system according to aspects of the present invention.

Figure 3 illustrates an exemplary volume management table according to aspects of the invention.

Figure 4 and Figure 5 show exemplary structures for memories of the storage controllers of storage subsystems according to aspects of the present invention.

Figures 6, 7, 8, 9, 10, 11, 12, 13, 14, 15, 16, 17 and 18 show the programs and tables of Figure 4 and Figure 5 in further detail, according to aspects of the present invention.

Figure 19 illustrates a relationship between a capacity pool chunk, a capacity pool page and disk cache according to aspects of the present invention.

Figure 20 illustrates a relationship between virtual volume pages, virtual volume slots and a virtual volume according to aspects of the present invention.

Figure 21 illustrates a relationship between a capacity pool management table, a capacity pool element management table, a capacity pool chunk management table, a RAID group management table and a capacity pool chunk according to aspects of the present invention.

Figure 22 illustrates a relationship between a virtual volume, a virtual volume page, a virtual volume management table, a virtual volume page management table, a capacity pool management table, a capacity pool chunk, a capacity pool page and a capacity pool element management table according to aspects of the present invention.

Figure 23 illustrates a relationship between a virtual volume, a virtual volume page, a capacity pool chunk, a capacity pool page and a capacity pool page management table according to aspects of the present invention.

Figure 24 illustrates a relationship between a cache slot, a cache management table and disk slots according to aspects of the present invention.

Figure 25 illustrates a relationship between virtual volumes and pair management tables of two storage subsystems according to aspects of the present invention.

Figure 26 illustrates a relationship between virtual volumes, RAID groups and an external volume according to aspects of the present invention.

Figure 27 illustrates an exemplary method of conducting the volume operation waiting program according to aspects of the present invention.

Figure 28 illustrates an exemplary method of conducting the pair create program according to aspects of the present invention.

Figure 29 illustrates an exemplary method of conducting the pair delete program according to aspects of the present invention.

Figure 30 illustrates an exemplary method of conducting the slot operation program according to aspects of the present invention.

Figure 31 illustrates an exemplary method of conducting the write I/O operation program according to aspects of the present invention.

Figure 32 illustrates an exemplary method of conducting the read I/O operation program according to aspects of the present invention.

Figure 33A and Figure 33B show an exemplary method of conducting the capacity pool page allocation program according to aspects of the present invention.

Figure 34 illustrates an exemplary method of conducting the cache staging program according to aspects of the present invention.

Figure 35 illustrates an exemplary method of conducting the disk flush program according to aspects of the present invention.

Figure 36, Figure 37 and Figure 38 show an exemplary method of conducting the cache destaging program according to aspects of the present invention.

Figure 39 illustrates an exemplary method of conducting the capacity pool garbage collection program according to aspects of the present invention.

Figure 40 illustrates an exemplary method of conducting the capacity pool chunk releasing program according to aspects of the present invention.

Figure 41 provides a sequence of writing I/O to a master volume according to aspects of the present invention.

Figure 42 provides a sequence of writing I/O to a slave volume according to aspects of the present invention.

Figure 43 provides a sequence of destaging to an external volume from a master volume according to aspects of the present invention.

Figure 44 provides a sequence of destaging to an external volume from a slave volume according to aspects of the present invention.

Figure 45 illustrates a storage system according to other aspects of the present invention.

Figure 46 illustrates an exemplary structure for another capacity pool management program according to other aspects of the present invention.

Figure 47A and Figure 47B show an exemplary method of conducting a capacity pool page allocation according to other aspects of the present invention.

Figure 48 illustrates an external storage subsystem according to other aspects of the present invention.

Figure 49 illustrates an exemplary structure for a memory of an external storage subsystem according to other aspects of the present invention.

Figure 50 illustrates a capacity pool management program stored in the memory of the storage controller.

Figure 51 illustrates an exemplary structure for a virtual volume page management table according to other aspects of the present invention.

Figure 52 illustrates an exemplary method of conducting a virtual volume page management according to other aspects of the present invention.

Figure 53 illustrates an exemplary sequence of destaging to the external volume from the master volume according to other aspects of the present invention.

Figure 54 illustrates an exemplary sequence of destaging to the external volume from the slave volume according to other aspects of the present invention.

Figure 55 illustrates an exemplary embodiment of a computer platform upon which the inventive system may be implemented.

In the following detailed description, reference will be made to the accompanying drawing(s), in which identical functional elements are designated with like numerals. The aforementioned accompanying drawings show, by way of illustration, and not by way of limitation, specific embodiments and implementations consistent with principles of the present invention. These implementations are described in sufficient detail to enable those skilled in the art to practice the invention and it is to be understood that other implementations may be utilized and that structural changes and/or substitutions of various elements may be made without departing from the scope and spirit of present invention. The following detailed description is, therefore, not to be construed in a limited sense. Additionally, the various embodiments of the invention as described may be implemented in the from of a software running on a general purpose computer, in the from of a specialized hardware, or combination of software and hardware.

When two technologies, including thin provisioning and high availability are combined to serve both purposes of minimizing waste of storage space and rapid and easy access to storage volume, certain issues arise. For example, if the two technologies are combined, double storage capacity is required. This is due to the fact that the page management table is not shared by the storage subsystems. Therefore, there is a possibility that the page management tables of the two storage subsystems allocate and assign the same capacity pool area to the page areas of thin provisioning volumes of the two different storage subsystems. This causes collision if both storage subsystems try to conduct I/O operations to the same space.

Additionally, if the page management table is shared between the storage subsystems to protect against the aforesaid collision, latency is caused by communication or lock collision between the storage subsystems.

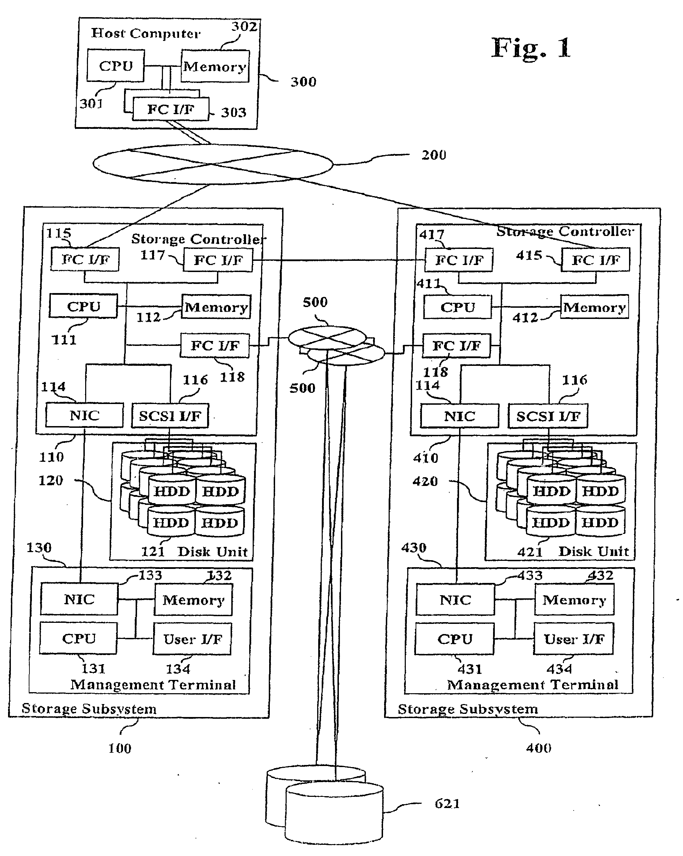

Components of a storage system according to aspects of the present invention are shown and described in Figures 1, 2, 3, 4, 5 and 6 through 18.

Figure 1 illustrates a storage system according to aspects of the present invention.

The storage system shown in Figure 1 includes two or more storage subsystems 100, 400, a host computer 300, and an external volume 621. The storage system may also include one or more storage networks 200, 500. The storage subsystems 100, 400 may be coupled together directly or through a network not shown. The host computer may be coupled to the storage subsystems 100, 400 directly or through the storage network 200. The external volume 621 may be coupled to the storage subsystems 100, 400 directly or through the storage network 500.

The host Computer 300 includes a CPU 301, a memory 302 and tow storage interface 303s. The CPU 301 is for executing programs and tables that are stored in the memory 302. The storage interface 302 is coupled to a host Interface 114 at the storage subsystem 100 through the storage Network 200.

The storage subsystem 100 includes a storage controller 110, a disk unit 120, and a management terminal 130.

The storage controller 110 Includes a CPU 111 for running programs and tables stored in a memory 112, the memory 112 for storing the programs, tables and data, a disk interface 116 that may be a SCSI I/F for coupling the storage controller to the disk units, a host interface 115 that may be a Fibre Channel I/F for coupling the storage controller to the storage interface 303 of the host computer 300 through the storage network 200, a management terminal interface 114 that may be a NIC I/F for coupling the storage controller to a storage controller interface 133 of the management terminal 130, a storage controller interface 117 that may be a Fibre Channel I/F for coupling the storage controller to a storage controller interface 417 at the other storage subsystem 400, and an external storage controller interface 118 that may be a Fibre Channel I/F for coupling the storage controller 110 to the external volume 621 through the storage network 500. The host Interface 115 receives I/O requests from the host computer 300 and informs the CPU 111. The management terminal interface 114 receives volume, disk and capacity pool operation requests from the management terminal 130 and informs the CPU 111.

The disk unit 120 includes disks such as hard disk drives (HDD) 121.

The management terminal 130 includes a CPU 131 for managing the processes carried out by the management terminal, a memory 132, a storage controller interface 133 that may be a NIC for coupling the management terminal to the interface 114 at the storage controller 110 and for sending volume, disk and capacity pool operations to the storage controller 110, and a user interface 134 such as a keyboard, mouse or monitor.

The storage subsystem 400 includes a storage controller 410, a disk unit 420, and a management terminal 430. These elements have components similar to those described with respect to the storage subsystem 100. The elements of the storage subsystem 400 are described in the remainder of this paragraph. The storage controller 410 Includes a CPU 411 for running programs and tables stored in a memory 412, the memory 412 for storing the programs, tables and data, a disk interface 416 that may be a SCSI I/F for coupling the storage controller to the disk units, a host interface 415 that may be a Fibre Channel I/F for coupling the storage controller to the storage interface 303 of the host computer 300 through the storage network 200, a management terminal interface 414 that may be a NIC I/F for coupling the storage controller to a storage controller interface 433 of the management terminal 430, a storage controller interface 417 that may be a Fibre Channel I/F for coupling the storage controller to a storage controller interface 417 at the other storage subsystem 400, and an external storage controller interface 418 that may be a Fibre Channel I/F for coupling the storage controller 410 to the external volume 621 through the storage network 500. The host Interface 415 receives I/O requests from the host computer 300 and informs the CPU 411. The management terminal interface 414 receives volume, disk and capacity pool operation requests from the management terminal 430 and informs the CPU 411. The disk unit 420 includes disks such as hard disk drives (HDD) 421. The management terminal 430 includes a CPU 431 for managing the processes carried out by the management terminal, a memory 432, a storage controller interface 433 that may be a NIC for coupling the management terminal to the interface 414 at the storage controller 410 and for sending volume, disk and capacity pool operations to the storage controller 410, and a user interface 434 such as a keyboard, mouse or monitor.

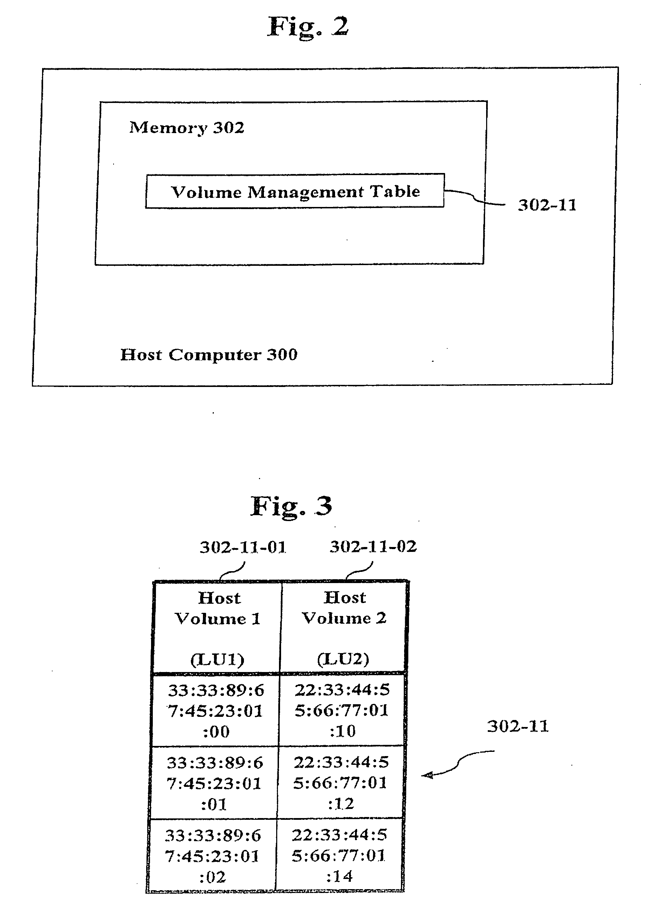

Figure 2 illustrates an exemplary memory for a host computer of a storage system according to aspects of the present invention.

The memory 302 of the host computer 300 of Figure may include a volume management table 302-11.

Figure 3 illustrates an exemplary volume management table according to aspects of the invention.

The volume management table includes two host volume information columns 302-11-01, 302-11-02 for pairing volumes of information that may be used alternatively to help rescue the data by changing the path from one volume to another in case of failure of one volume. By such pairing of the storage volumes on the storage subsystems that form a storage system, a storage redundancy is provided that improves data availability.

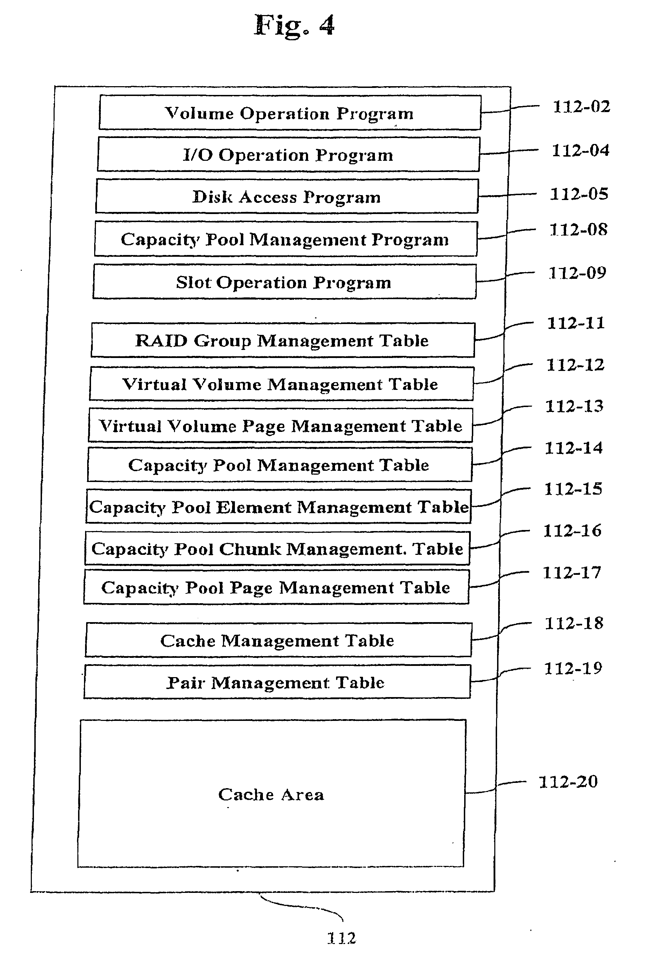

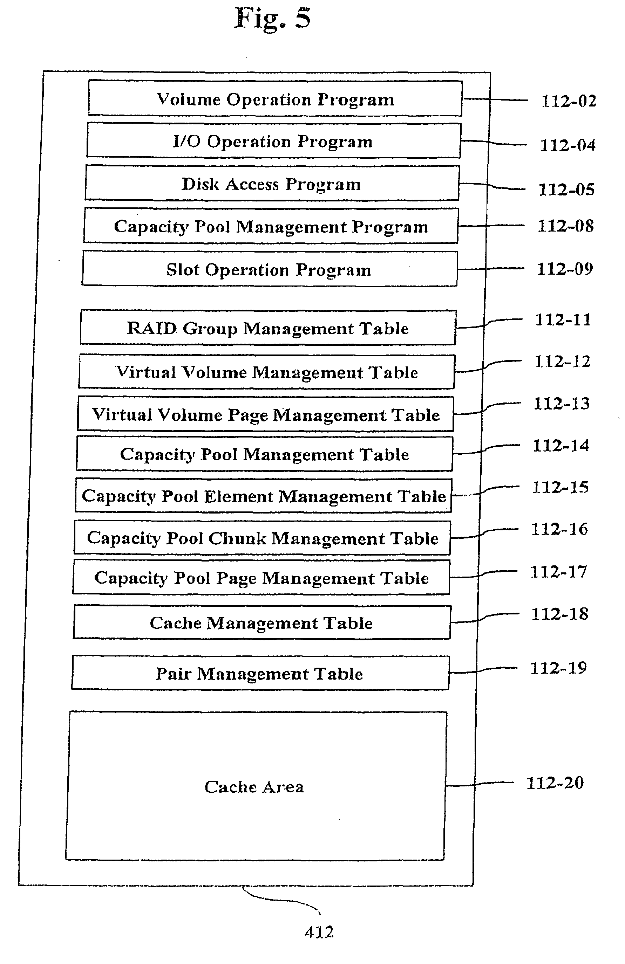

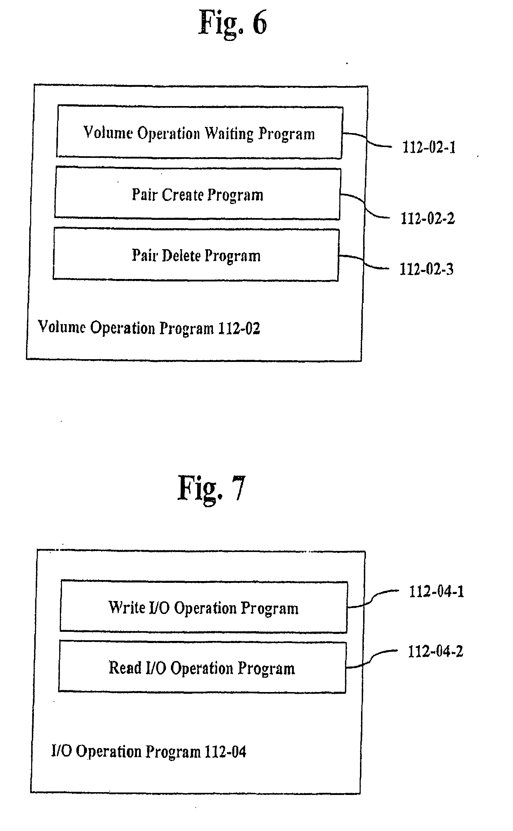

Figure 4 and Figure 5 show exemplary structures for memories of the storage controllers of storage subsystems according to aspects of the present invention. Figures 6, 7, 8, 9, 10, 11, 12, 13, 14, 15, 16, 17 and 18 show the programs and tables of Figure 4 in further detail, according to aspects of the present invention.

Figure 4 may correspond to the memory 112 of the storage subsystem 100 and Figure 5 may correspond to the memory 412 of the storage subsystem 400. These memories may belong to the storage subsystems 100, 400 of Figure 1 as well. A series of programs and tables are shown as being stored in the memories 112, 412. Because the two memories 112, 114 are similar, only Figure 4 is described in further detail below.

The programs stored in the memory 112 of the storage controller include a volume operation program 112-02. As shown in Figure 6, the volume operation program includes a volume operation waiting program 112-02-1, a pair create program 112-02-2 and a pair delete program 112-02-3. The volume operation waiting program 112-02-1 is a system residence program that is executed when the CPU 111 receives a "Pair Create" or "Pair Delete" request. The pair create program 112-02-2 establishes a relationship for volume duplication between storage volumes of the storage subsystem 100 and the storage subsystem 400 and is executed when the CPU 111 receives a "Pair Create" request. The pair create program 112-02-2 is called by volume operation waiting program 112-02-1. The pair delete program 112-02-3 is called by volume operation waiting program 112-02-1 and releases a relationship for volume duplication that is in existence between the storage volumes of the storage subsystem 100 and the storage subsystem 400. It is executed when the CPU 111 receives a "Pair Delete" request.

The programs stored in the memory 112 of the storage controller further include an I/O operation program 112-04. As shown in Figure 7, the I/O operation program 112-04 includes a write I/O operation program 112-04-1 and a read I/O operation program 112-04-2. The write I/O operation program 112-04-1 is a system residence program that transfers I/O data from the host computer 300 to a cache area 112-20 and is executed when the CPU 111 receives a write I/O request. The read I/O operation program 112-04-2 is also a system residence program that transfers I/O data from cache area 112-20 to the host computer 300 and is executed when the CPU 111 receives a read I/O request.

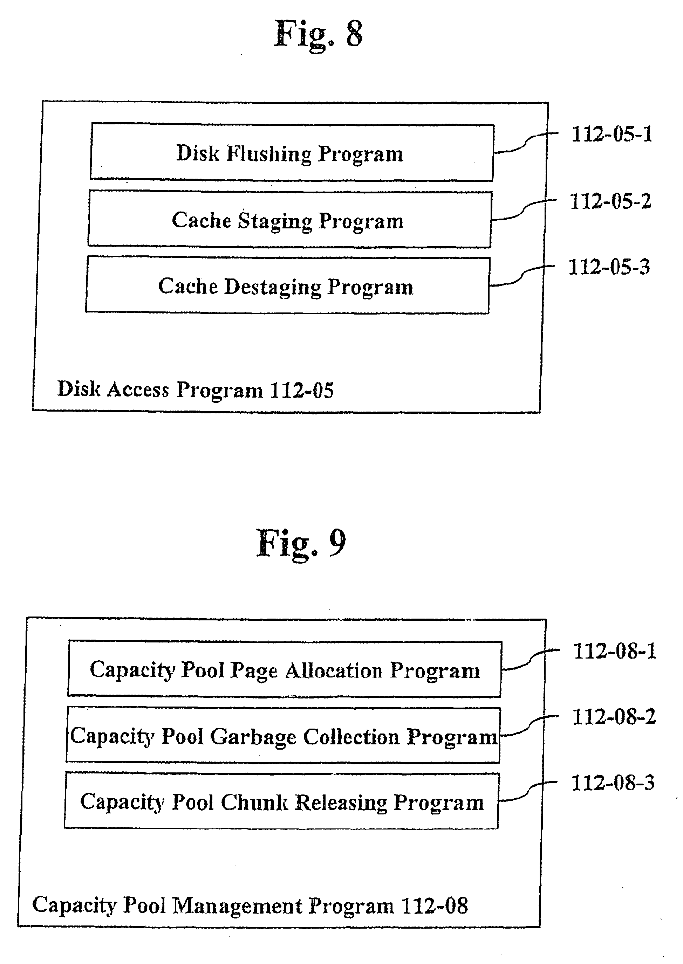

The programs stored in the memory 112 of the storage controller further include a disk access program 112-05. As shown in Figure 8, the disk access program 112-05 includes a disk flushing program 112-05-1, a cache staging program 112-05-2 and a cache destaging program 112-05-3. The disk flushing program 112-05-1 is a system residence program that searches dirty cache data and flushes them to the disks 121 and is executed when the workload of the CPU 111 is low. The cache staging program 112-05-2 transfers data from the disk 121 to the cache area 112-05-20 and is executed when the CPU 111 needs to access the data in the disk 121. The cache destaging program 112-05-3 transfers the data from the cache area and is executed when the disk flushing program 112-05-1 flushes a dirty cache data to the disk 121.

The programs stored in the memory 112 of the storage controller further include a capacity pool management program 112-08. As shown in Figure 9, the capacity pool management program 112-08 includes a capacity pool page allocation program 112-08-1, a capacity pool garbage collection program 112-08-2 and a capacity pool extension program 112-08-3. The capacity allocation program 112-08-1 receives a new capacity pool page and a capacity pool chunk from the capacity pool and sends requests to other storage subsystem to omit an arbitrary chunk. The capacity pool garbage collection program 112-08-2 is a system residence program that performs garbage collection from the capacity pools and is executed when the workload of the CPU 111 is low. The capacity pool chunk releasing program 112-08-3 is a system residence program that runs when the CPU 111 received a "capacity pool extension" request and adds a specified RAID group or an external volume 621 to a specified capacity pool.

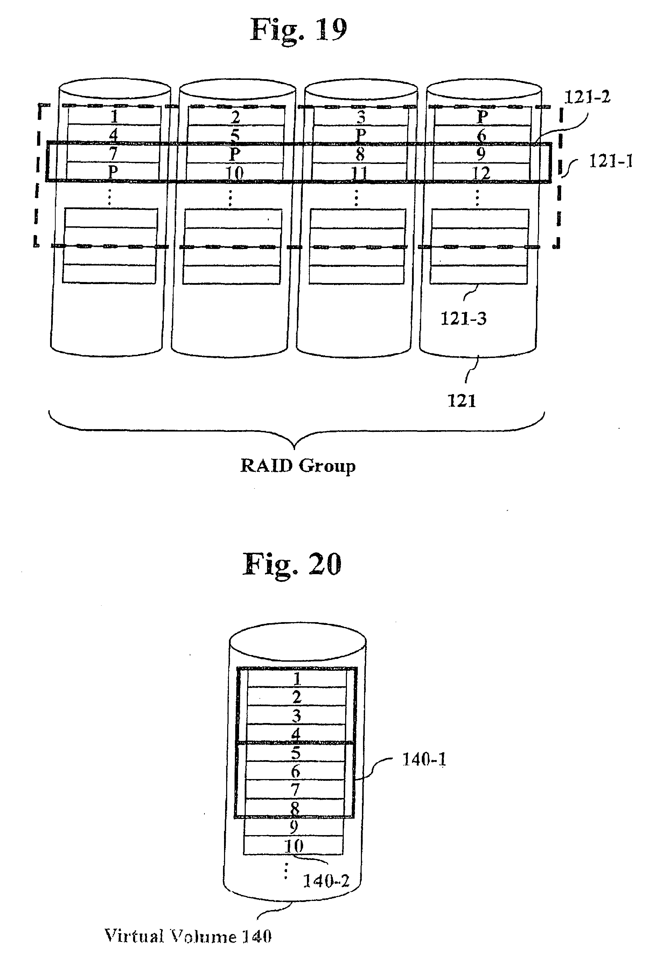

The programs stored in the memory 112 of the storage controller further include a slot operation program 112-09 that operates to lock or unlock a slot 121-3, shown in Figure 19, following a request from the other storage subsystem.

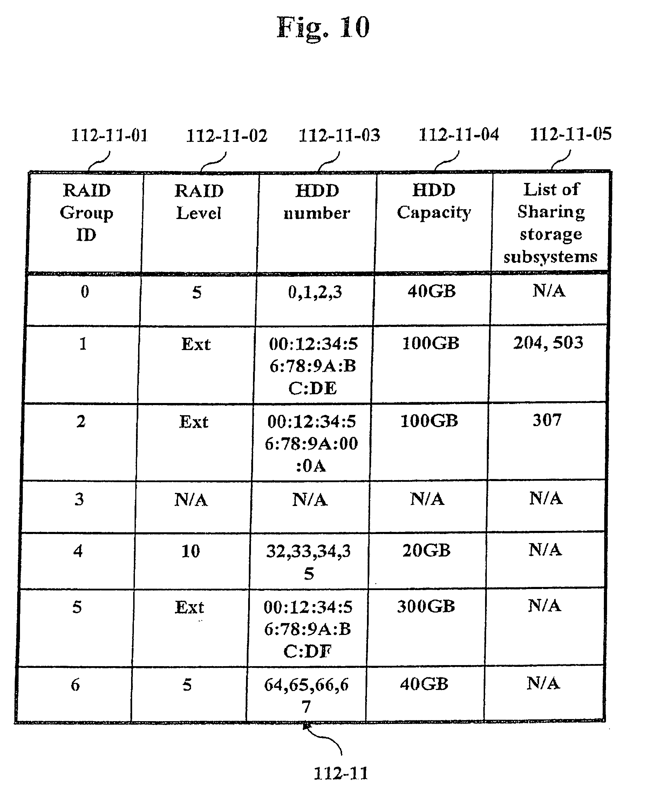

The tables stored in the memory 112 of the storage controller include a RAID group management table 112-11. As shown in Figure 10, the RAID group management table 112-11 includes a RAID group number 112-11-1 column that shows the ID of each RAID group in the storage controller 110, 410, a RAID level and RAID organization 112-11-02 column, a HDD number 112-11-03, a HDD capacity 112-11-04 and a list of sharing storage subsystems 112-11-05. In the RAID level column 112-11-02, having a number "10" as the entry means "mirroring and striping," a number "5" means "parity striping," a number "6" means "double parity striping," an entry "EXT" means using the external volume 621, and the entry "N/A" means the RAID group doesn't exist. In the HDD number 112-11-03 column, if the RAID level information 112-11-02 is "10," "5" or "6," it means that the ID list of the disk 121, 421 is grouped in the RAID group and that the capacity of the RAID group includes the disk 121, 421. Storage subsystems that have been paired with the RAID group are shown in the last column of this table.

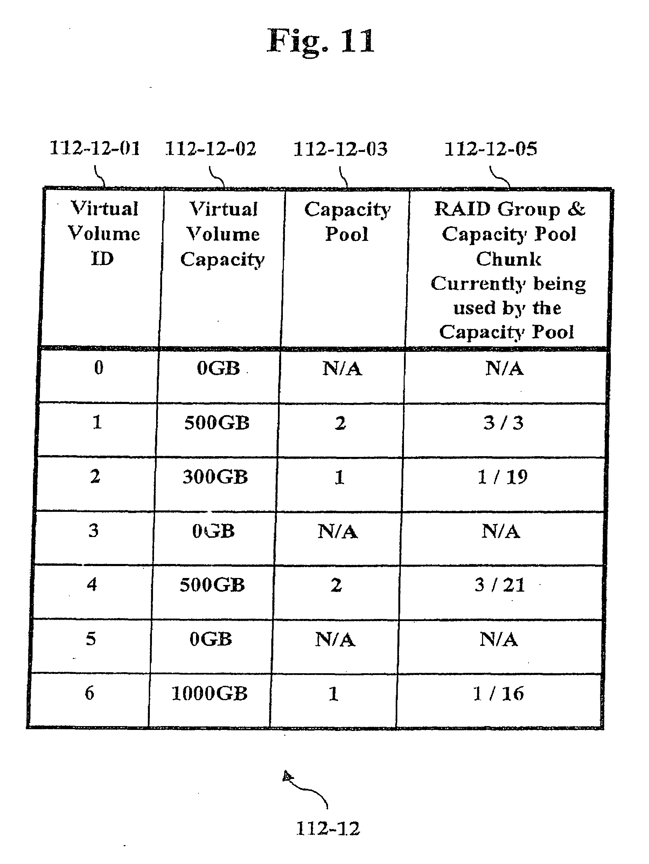

The tables stored in the memory 112 of the storage controller further include a virtual volume management table 112-12. As shown in Figure 11, the virtual volume management table 112-12 includes a volume number or ID column 112-12-01, a volume capacity column 112-12-02, a capacity pool number column 112-12-03 and a current chunk being used column 112-12-05. The volume column 112-12-01 includes the ID of each virtual volume in the storage controller 110, 410. The volume capacity column 112-12-02 includes the storage capacity of the corresponding virtual volume. The capacity pool number column 112-12-03 relates to the virtual volume and allocates capacity to store data from this capacity pool. The virtual volume gets its capacity pool pages from a chunk of a RAID group or an external volume. The chunk being currently used by the virtual volume is shown in the current chunk being used column 112-12-05. This column shows the RAID group and the chunk number of the chunk that is currently in use for various data storage operations.

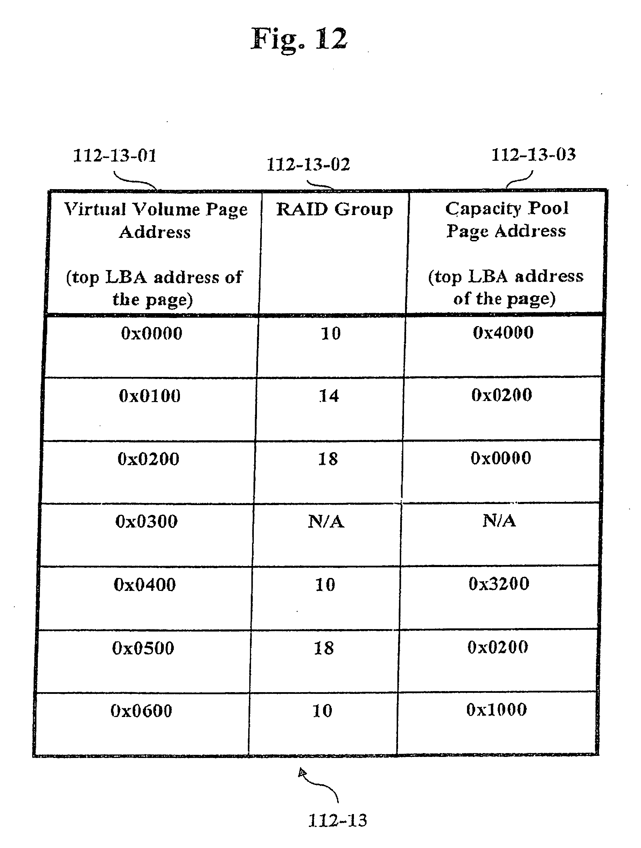

The tables stored in the memory 112 of the storage controller further include a virtual volume page management table 112-13. As shown in Figure 12, the virtual volume page management table 112-13 includes a virtual volume page address 112-13-01 column that provides the ID of the virtual volume page 140-1 in the virtual volume 140, a related RAID group number 112-13-02, and a capacity pool page address 112-13-03. The RAID group number 112-13-02 includes the allocated capacity pool page including the external volume 621 and an entry of N/A in this column means that the virtual volume page doesn't allocate a capacity pool page. The capacity pool page address 112-13-03 includes the start logical address of the related capacity pool page.

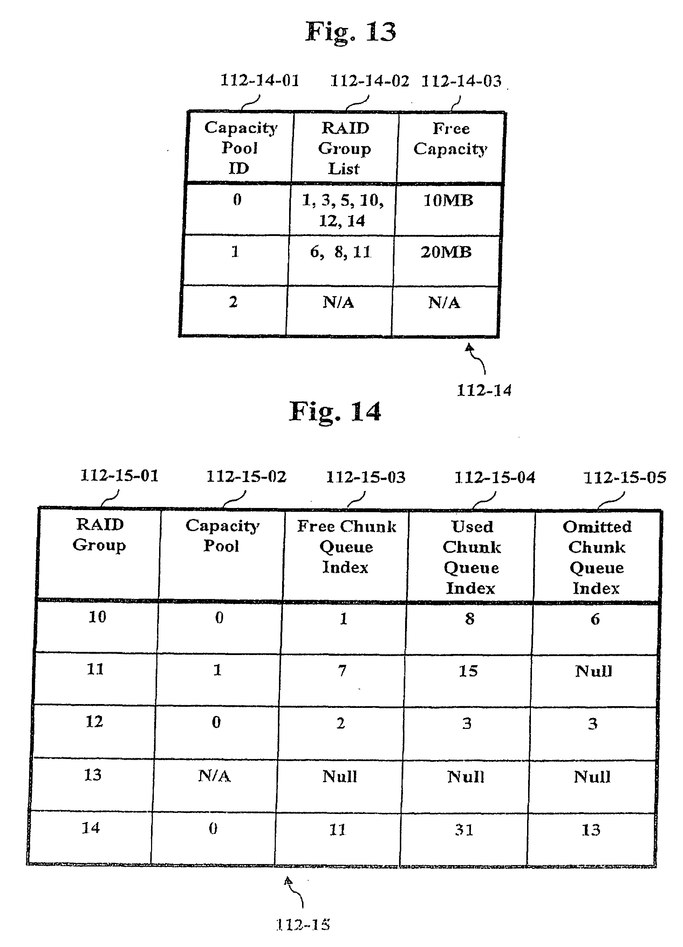

The tables stored in the memory 112 of the storage controller further include a capacity pool management table 112-14. As shown in Figure 13, the capacity pool management table 112-14 includes a capacity pool number 112-14-01, a RAID group list 112-14-02, and a free capacity information 112-14-03. The capacity pool number 112-14-01 includes the ID of the capacity pool in the storage controller 110, 410. The RAID group list 112-14-02 includes a list of the RAID groups in the capacity pool. An entry of N/A indicates that the capacity pool doesn't exist. The free capacity information 112-14-03 shows the capacity of total free area in the capacity pool.

The tables stored in the memory 112 of the storage controller further include a capacity pool management table 112-15. As shown in Figure 14, the capacity pool element management table 112-15 includes the following columns showing a RAID group number 112-15-01, a capacity pool number 112-15-02, a free chunk queue index 112-15-03, a used chunk queue index 112-15-04 and an omitted chunk queue index 112-15-05. The RAID group number 112-15-01 shows the ID of the RAID group in storage controller 110, 410. The capacity pool number 112-15-02 shows the ID of the capacity pool that the RAID group belongs to. The free chunk queue index 112-15-03 includes the number of the free chunk queue index. The used chunk queue index 112-15-04 includes the number of the used chunk queue index. The omitted chunk queue index 112-15-05 shows the number of the omitted chunk queue index. The RAID group manages the free chunks, the used chunks and the omitted chunks as queues.

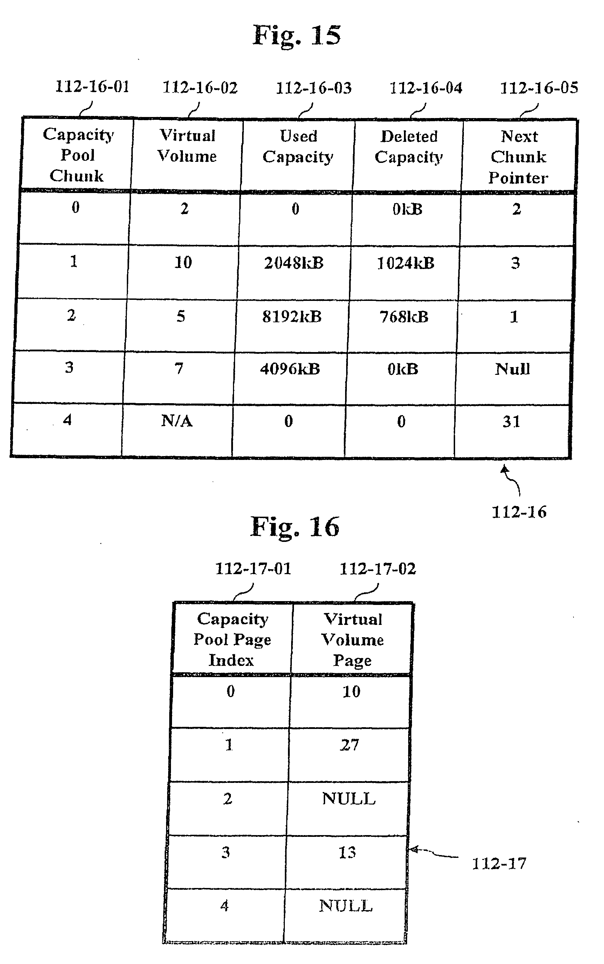

The tables stored in the memory 112 of the storage controller further include a capacity pool chunk management table 112-16. As shown in Figure 15, the capacity pool chunk management table 112-16 includes the following columns: capacity pool chunk number 112-16-01, a virtual volume number 112-16-02, a used capacity 112-16-03, deleted capacity 112-16-04 and a next chunk pointer 112-16-05. The capacity pool chunk number 112-16-01 includes the ID of the capacity pool chunk in the RAID group. The virtual volume number 112-16-02 includes a virtual volume number that uses the capacity pool chunk. The used capacity information 112-16-03 includes the total used capacity of the capacity pool chunk. When a virtual volume gets a capacity pool page from the capacity pool chunk, this parameter is increased by the capacity pool page size. The deleted capacity information 112-16-04 includes the total deleted capacity from the capacity pool chunk. When a virtual volume releases a capacity pool page by volume format or virtual volume page reallocation, this parameter is increased by the capacity pool page size. The next chunk pointer 112-16-05 includes the pointer of the other capacity pool chunk. The capacity pool chunks have a queue structure. The free chunk queue index 112-15-03 and used chunk queue index 112-15-04 are indices of the queue that were shown in Figure 14.

The tables stored in the memory 112 of the storage controller further include a capacity pool chunk management table 112-17. As shown in Figure 16, the capacity pool page management table 112-17 includes a capacity pool page index 112-17-01 that shows the offset of the capacity pool page in the capacity pool chunk and a virtual volume page number 112-17-02 that shows the virtual volume page number that refers to the capacity pool page. In this column, an entry of "null" means the page is deleted or not allocated.

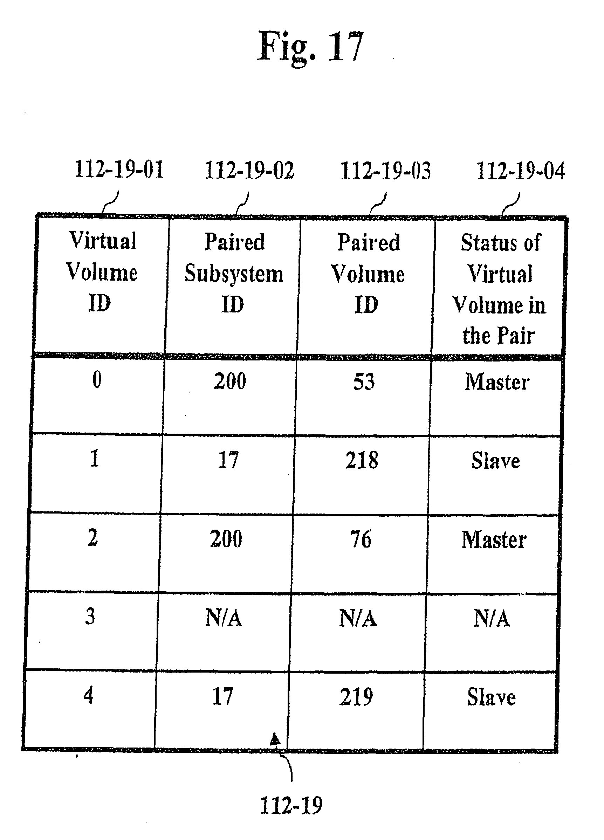

The tables stored in the memory 112 of the storage controller further include a pair management table 112-19. As shown in Figure 17, the pair management table 112-19 includes columns showing a volume number 112-19-01, a paired subsystem number 112-19-02 and a paired volume number 112-19-03. The volume number information 112-19-01 shows the ID of the virtual volume in the storage controller 110, 410. The paired subsystem information 112-19-02 shows the ID of the storage subsystem that the paired volume belongs to. The paired volume number information 112-19-03 shows the ID of the paired virtual volume in it own storage subsystem. The pair status information 112-19-04 shows the role of the volume in the pair as master, slave or N/A. Master means that the volume can operate capacity allocation of thin provisioning from the external volume. Slave means that the volume asks the master when an allocation should happen. If the master has already allocated a capacity pool page from the external volume, the slave relates the virtual volume page to aforesaid capacity pool page of the external volume. The entry N/A means that the volume doesn't have any relationship with other virtual volumes.

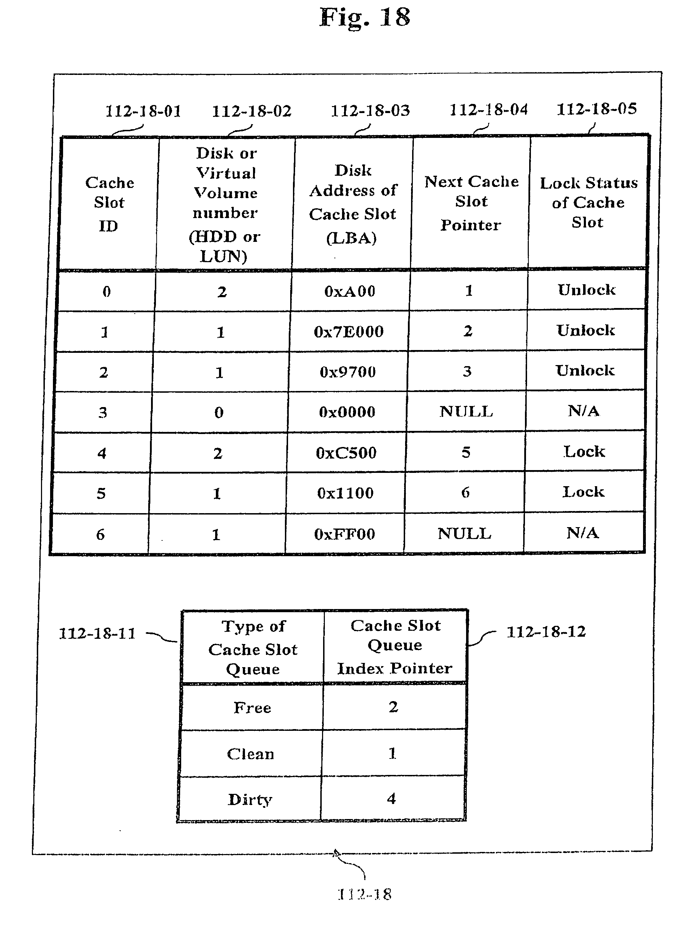

The tables stored in the memory 112 of the storage controller further include a cache management table 112-18. As shown in Figure 18, the cache management table 112-18 includes columns for including cache slot number 112-18-01, disk number or logical unit number (LUN) 112-18-02, disk address or logical block address (LBA) 112-18-03, next slot pointer 112-18-04, lock status 112-18-05, kind of queue 112-18-11 and queue index pointer 112-18-12. The cache slot number 112-18-01 includes the ID of the cache slot in cache area 112-20 where the cache area 112-20 includes plural cache slots. The disk number 112-18-02 includes the number of the disk 121 or a virtual volume 140, shown in Figure 20, where the cache slot stores a data. The disk number 112-18-02 can identify the disk 121 or the virtual volume 140 corresponding to the cache slot number. The disk address 112-18-03 includes the address of the disk where the cache slot stores a data. Cache slots have a queue structure and the next slot pointer 112-18-04 includes the next cache slot number. A "null" entry indicates a terminal of the queue. In the lock status 112-18-05 column, an entry of "lock" means the slot is locked. An entry of "unlock" means the slot is not locked. When the status is "lock," the CPU 111, 411 cannot overwrite by "lock" and wait until the status changes to "unlock". The kind of queue information 112-18-11 shows the kind of cache slot queue. In this column, an entry of "free" means a queue that has the unused cache slots, an entry of "clean" means a queue that has cache slots that stores same data with the disk slots, and an entry of "dirty" means a queue that has cache slots that store data different from the data in the disk slots, so the storage controller 110 needs to flush the cache slot data to the disk slot in the future. The queue index pointer 112-18-12 includes the index of the cache slot queue.

The memory 112, 412 of the storage controller further include a cache are 112-20. The cache area 112-20 includes a number of cache slots 112-20-1 that are managed by cache management table 112-18. The cache slots are shown in Figure 19.

The logical structure of a storage system according to aspects of the present invention are shown and described with respect to Figures 17 through 24. In Figures 19 through 24, solid lines indicate that an object is referred to by a pointer and dashed lines mean that an object is referred to by calculation.

Figure 19 illustrates a relationship between a capacity pool chunk, a capacity pool page and disk cache according to aspects of the present invention.

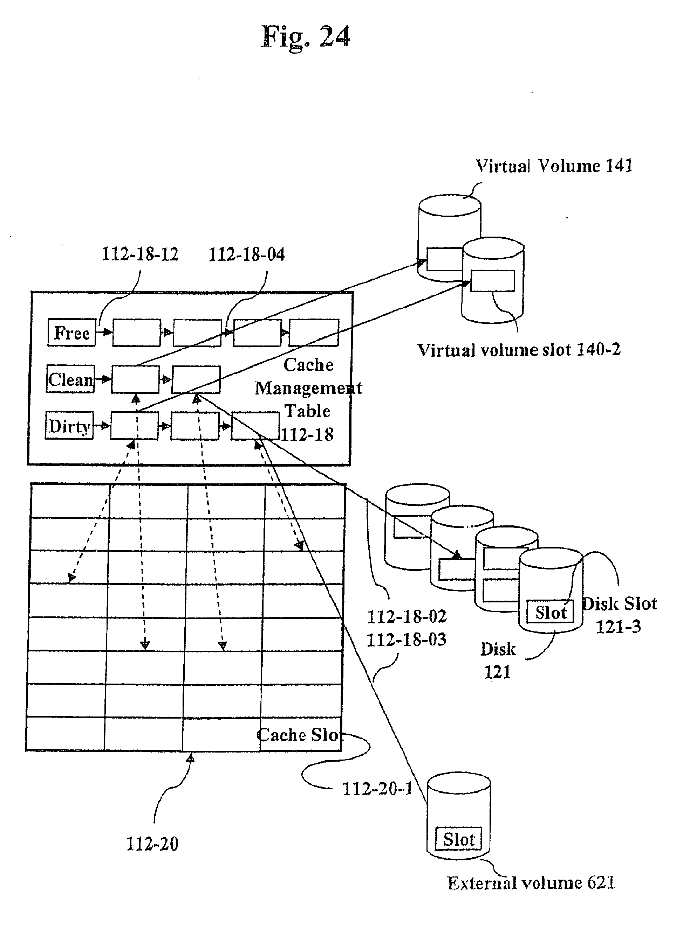

Each disk 121 in the disk unit 120 is divided into a number of disk slots 121-3. A capacity pool chunk 121-1 includes a plurality of disk slots 121-3 that are configured in a RAID group. The capacity pool chunk 121-1 can include 0 or more capacity pool pages 121-2. The size of capacity pool chunk 121-1 is fixed. The capacity pool page 121-2 may include one or more disk slots 121-3. The size of the capacity pool page 121-2 is also fixed. The size of each of the disk slots 121-3 in a stripe-block RAID is fixed and is the same as the size of the cache slot 112-20-1 shown in Figure 24. The disk slot includes host data or parity data.

Figure 20 illustrates a relationship between virtual volume pages, virtual volume slots and a virtual volume according to aspects of the present invention.

A virtual volume 140 allocates capacity from that capacity pool and may be accessed by the host computer 300 through I/O operations. The virtual volume includes virtual volume slots 140-2. One or more of the virtual volume slots 140-2 form a virtual volume page 140-1. A virtual volume slot 140-2 has the same capacity as a cache slot 112-20-1 or a disk slot 121-3.

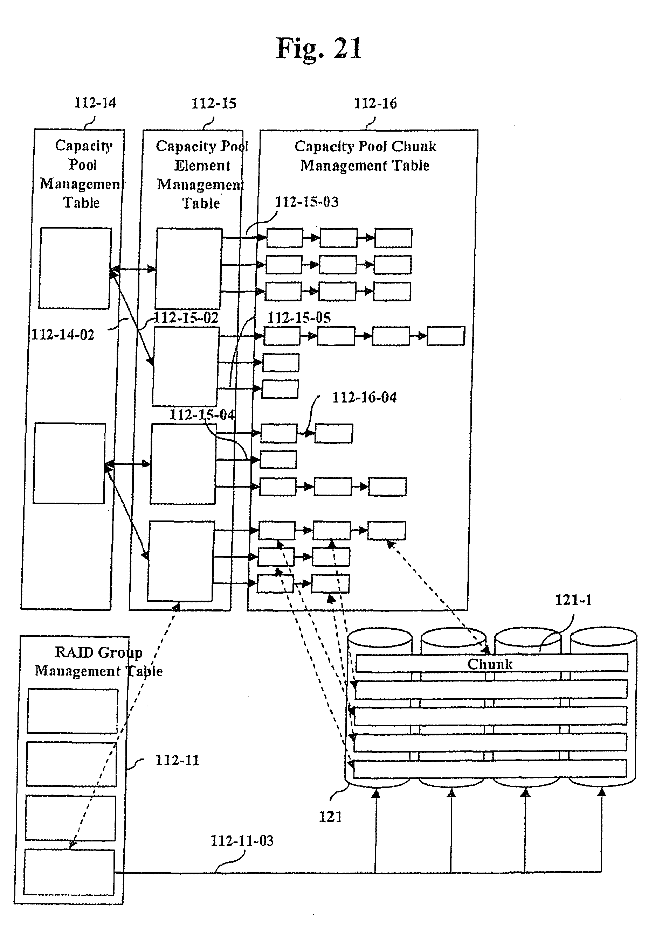

Figure 21 illustrates a relationship between a capacity pool management table, a capacity pool element management table, a capacity pool chunk management table, a RAID group management table and a capacity pool chunk according to aspects of the present invention.

The relationship between the capacity pool management table 112-14, the capacity pool element management table 112-15, the capacity pool chunk management table 112-16, the RAID group management table 112-11 and the capacity pool chunks 121-1 is shown. As shown, the capacity pool management table 112-14 refers to the capacity pool element management table 112-15 according to the RAID group list 112-14-02. The capacity pool element management table 112-15 refers to the capacity pool management table 112-14 according to the capacity pool number 112-15-02. The capacity pool element management table 112-15 refers to the capacity pool chunk management table 112-16 according to the free chunk queue 112-15-03, used chunk queue 112-15-04 and omitted chunk queue 112-15-05. The relationship between the capacity pool element management table 112-15 and the RAID group management table 112-11 is fixed. The relationship between the capacity pool chunk 121-1 and the capacity pool chunk management table 112-16 is also fixed. The deleted capacity 112-16-04 is used inside the capacity pool chunk management table 112-16 for referring one chunk to another.

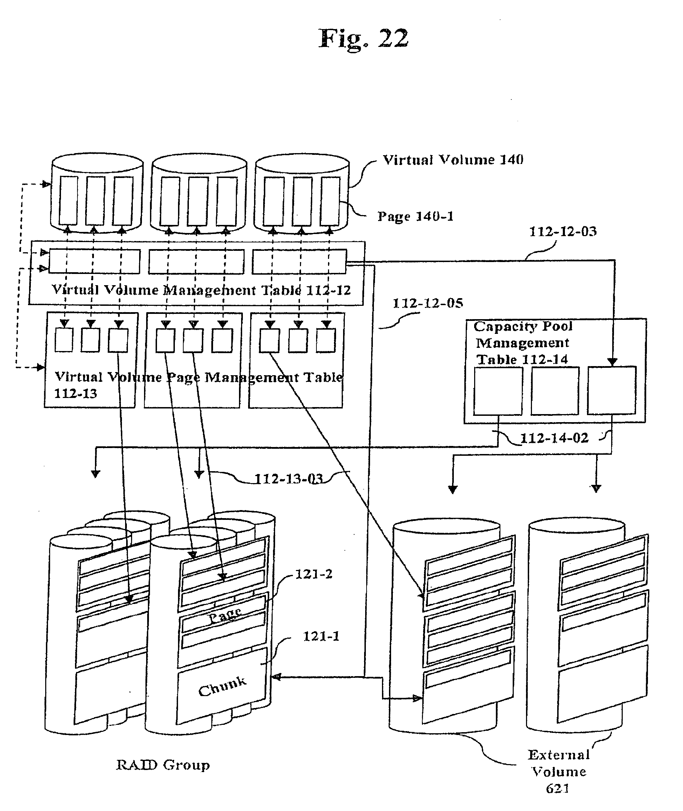

Figure 22 illustrates a relationship between a virtual volume, a virtual volume page, a virtual volume management table, a virtual volume page management table, a capacity pool management table, a capacity pool chunk, a capacity pool page and a capacity pool element management table according to aspects of the present invention.

The virtual volume management table 112-12 refers to the capacity pool management table 112-14 according to the capacity pool number information 112-12-03. The virtual volume management table 112-12 refers to the allocated capacity pool chunk 121-1 according to the current chunk information 112-12-05. The capacity pool management table 112-14 refers to the RAID groups on the hard disk or on the external volume 621 according to the RAID group list 112-14-02. The virtual volume page management table 112-13 refers to the capacity pool page 121-2 according to the capacity pool page address 112-13-03 and the capacity pool page size. The relationship between the virtual volume 140 and virtual volume management table 112-12 is fixed. The relationship between the virtual volume management table 112-12 and virtual volume page management table 112-13 is fixed. The relationship between the virtual volume page 140-1 and virtual volume page management table 112-13 is fixed.

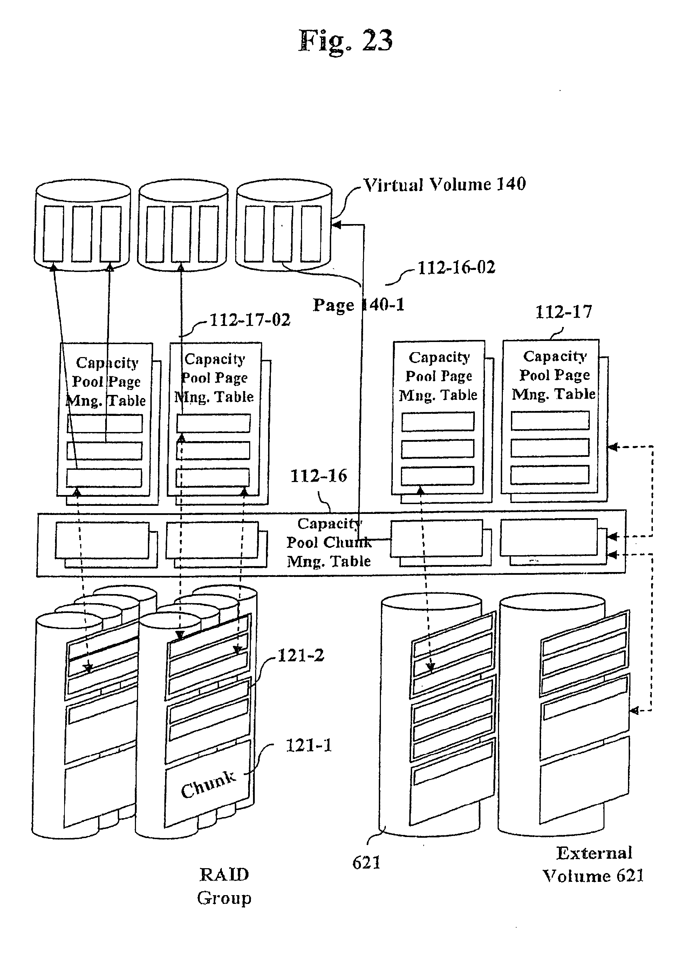

Figure 23 illustrates a relationship between a virtual volume, a virtual volume page, a capacity pool chunk, a capacity pool page and a capacity pool page management table according to aspects of the present invention.

The relationship between the virtual volume 140, the virtual volume page 140-1, the capacity pool chunk 121-1, the capacity pool page 121-2 and the capacity pool page management table 112-17 is shown. The capacity pool chunk management table 112-16 refers to the virtual volume 140 according to the virtual volume number 112-16-02. The capacity pool page management table 112-17 refers to the virtual volume page 140-1 according to the virtual volume page number 112-17-02. The relationship between the capacity pool chunk 121-1 and the capacity pool chunk management table 112-16 is fixed. It is possible to relate the capacity pool page management table 112-17 to the capacity pool page 121-2 according to the entries of the capacity pool page management table.

Figure 24 illustrates a relationship between a cache slot, a cache management table and disk slots according to aspects of the present invention.

The relationship between the cache slots 112-20-1, the cache management table 112-18 and the disk slots 121-3 is shown. The cache management table 112-18 refers to the disk slot 121-3 according to the disk number 112-18-02 and the disk address 112-18-03. The relationship between the cache management table 112-18 and the cache slots 112-20-1 is fixed.

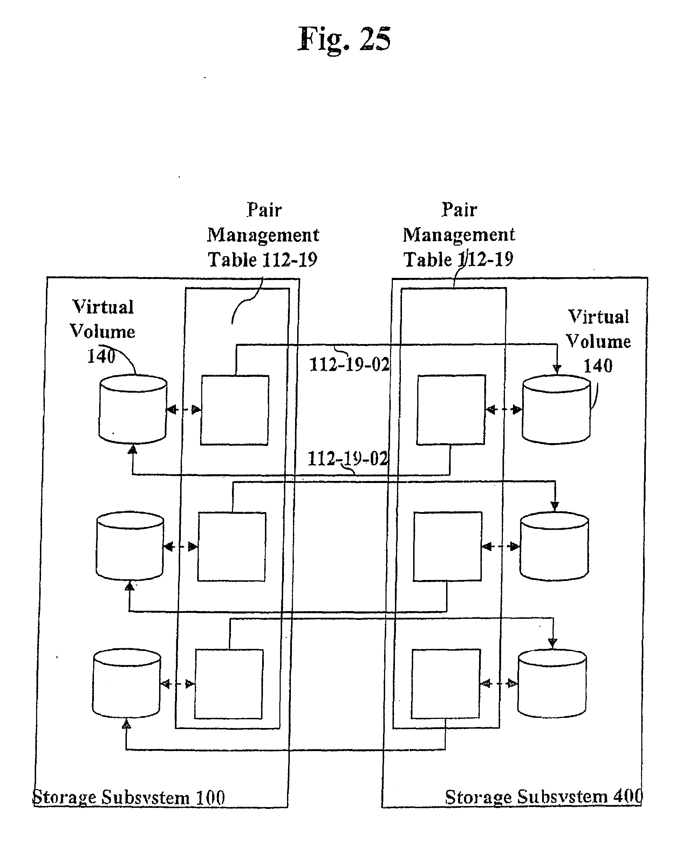

Figure 25 illustrates a relationship between virtual volumes and pair management tables of two storage subsystems according to aspects of the present invention.

The relationship between the virtual volumes 140, belonging to one of the storage subsystem 100, and the virtual volumes 140 on the other one of the two storage subsystems 100, 400 is established according to the pair management tables 112-19. The pair management table 112-19 relates the virtual volume 140 of one storage subsystem 100 to the virtual volume 140 of the other storage subsystem 400 according to the value in the paired subsystem 112-19-02 and paired volume 112-19-03 columns of the pair management table 112-19 of each subsystem.

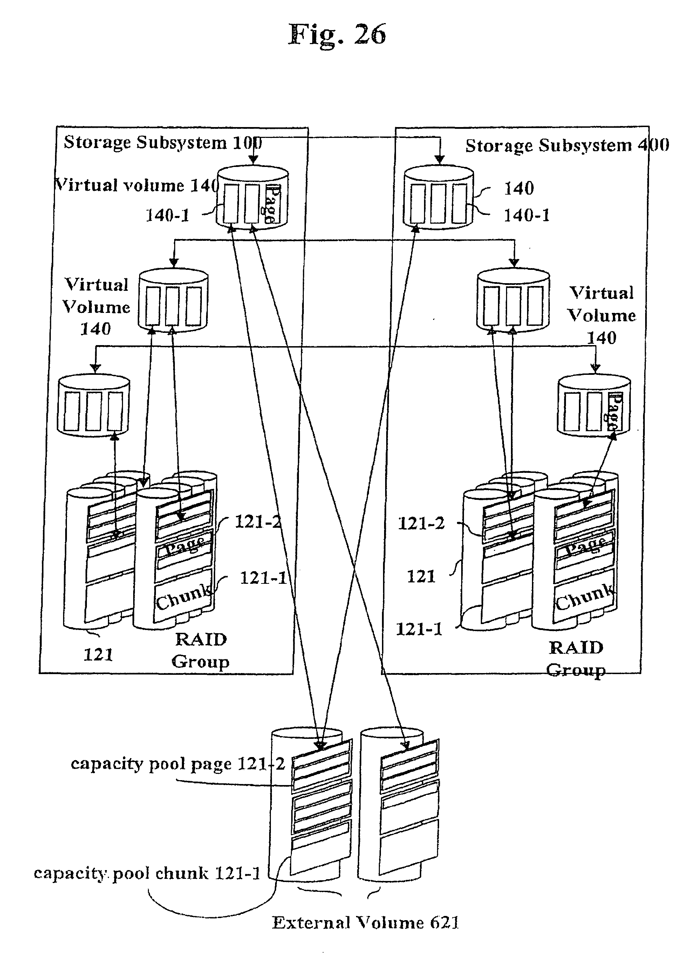

Figure 26 illustrates a relationship between virtual volumes, RAID groups and an external volume according to aspects of the present invention.

The relationship between the virtual volumes 140, the RAID groups and the external volume 621 is shown. One type of pairing is established by relating one virtual volume 140 of the storage subsystem 100 and one virtual volume 140 of the storage subsystem 400. In another type of pairing, the virtual volume page 140-1 of the storage subsystem 100 refers to the capacity pool page 121-2 belonging to the external volume 621 or to the disks 121 of the same storage subsystem 100. The virtual volume page 140-1 of the storage subsystem 400 refers to the capacity pool page 121-2 belonging to the external volume 621 or to the disks 121 of the same storage subsystem 400. The same capacity pool page 121-2 of the external volume 621 is shared by the paired virtual volumes 140 of the storage subsystems 100, 400. So virtual volumes 140 may be paired between storage subsystems and the virtual volume of each of the storage subsystems may be paired with the external volume. But, the virtual volume of each storage subsystem is paired only with the disks of the same storage subsystem.

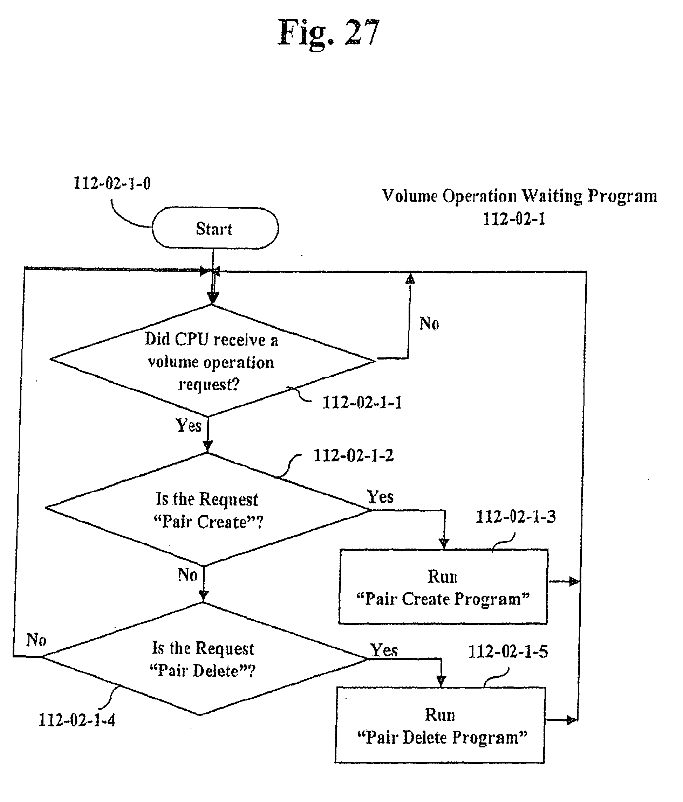

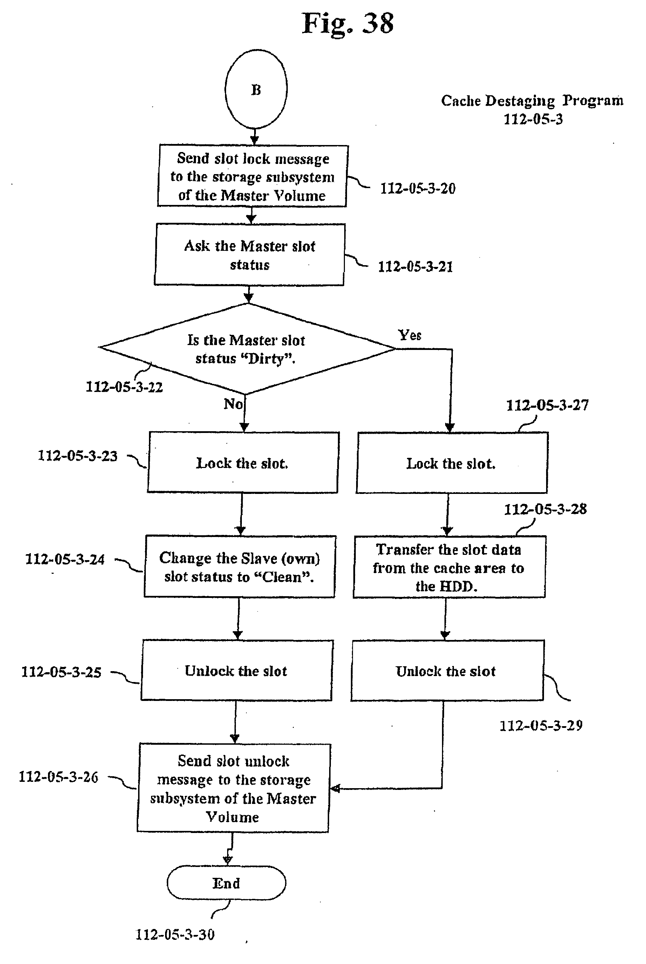

Figures 27 through 38 show flowcharts of methods carried out by the CPU 111 of the storage subsystem 100 or the CPU 411 of the storage subsystem 400. While the following features are described with respect to CPU 111 of the storage subsystem 100, they equally apply to the storage subsystem 400.

Figure 27 illustrates an exemplary method of conducting the volume operation waiting program according to aspects of the present invention.

One exemplary method of conducting the volume operation waiting program 112-02-1 of Figure 6 is shown in the flow chart of Figure 27. The method begins at 112-02-1-0. At 112-02-1-1, the method determines whether the CPU has received a volume operation request or not. If the CPU has received a volume operation request, the method proceeds to 112-02-1-2. If the CPU 111 has not received such a request the method repeats the determination step 112-02-1-1. At 112-02-1-2, the method determines whether received request is a "Pair Create" request. If a "Pair Create" request has been received, the method calls the pair create program 112-02-2 executes this program at 112-02-1-3. After step 112-02-1-3, the method returns to step 112-02-1-1 to wait for a next request. If the received request is not a "Pair Create" request, then at 112-02-1-4, the method determines whether the received message is a "Pair Delete" message. If a "Pair Delete" request is received at the CPU 111, the method proceeds to step 112-02-1-5. At 112-02-1-5, the CPU 111 calls the pair delete program 112-02-3 to break up existing virtual volume pairing between two or more storage subsystems. If a "Pair Delete" request is not received, the method returns to step 112-02-1-1. Also, after step 112-02-1-5, the method returns to step 112-02-1-1.

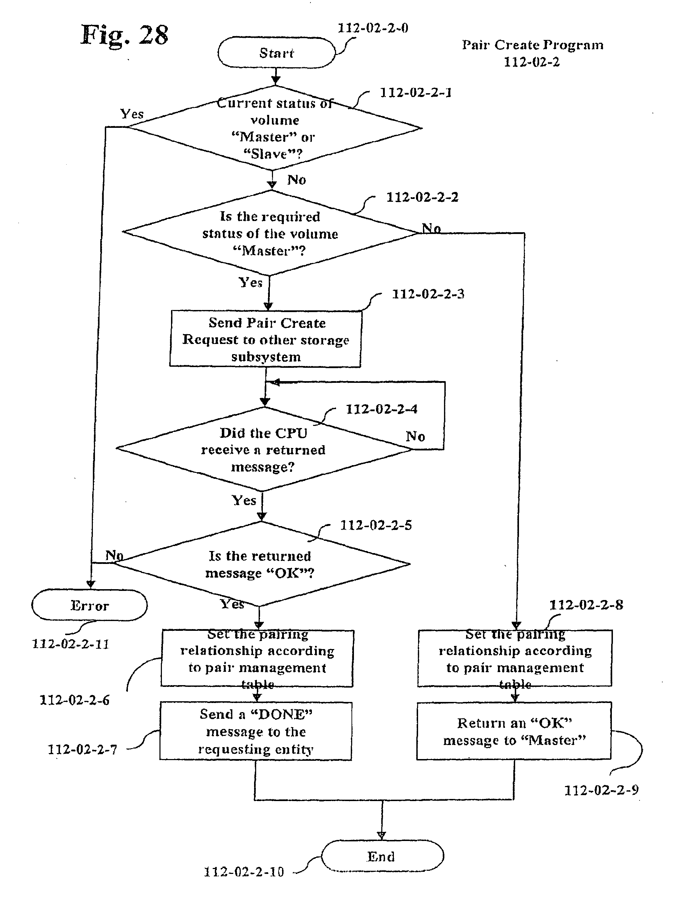

Figure 28 illustrates an exemplary method of conducting the pair create program according to aspects of the present invention.

One exemplary method of conducting the pair create program 112-02-2 of Figure 6 is shown in the flow chart of Figure 28. This method may be carried out by the CPU of either of the storage subsystems. The method begins at 112-02-2-0. At 112-02-2-1, the method determines whether a designated virtual volume 140 has already been paired with another volume. If the paired subsystem information 112-19-02, the paired volume number information 112-19-03 and the pair status information 112-19-04 of Figure 17 are set to "N/A," then the virtual volume has not been paired yet. If a pair exists for this volume, the method determines that an error has occurred at 112-02-2-11. If a pair does not exist, the method proceeds to step 112-02-2-2 where it checks the status of the designated virtual volume 140. Here, the method determines whether the required status of the designated volume is Master or not. If the status is determined as Master, the method proceeds to 112-02-2-3 where it sends a "Pair Create" request to the other storage subsystem. At 112-02-2-3 the "Pair Create" request message is sent to the other storage subsystem to request establishing of a paired relationship with the designated volume in the Master status.

At 112-02-2-4, the method waits for the CPU to receive a returned message. At 112-02-2-5, the returned message is checked. If the message is "ok," the pairing information has been set successfully and the method proceeds to step 112-02-2-6. At 112-02-2-6 the method sets the information of the designated virtual volume 140 according to the information in the pair management table112-19 including the paired subsystem information 112-19-02, paired volume number information 112-19-03 and the Master or Slave status 112-19-04 of the designated virtual volume. The method then proceeds to step 112-02-2-7 where a "done" message is sent to the sender of the "Pair Create" request. The "Pair Create" request is usually sent by the host computer 300, management terminal 130 or management terminal 430. At 112-02-2-10 the pair create program 112-02-2 ends.

If at 112-02-2-2 the status of the designated virtual volume is not determined as Master then the status is Slave and the method proceeds to 112-02-2-8. At 112-02-2-8, the method sets the pairing relationship between the designated virtual volume 140 and its pair according to the information regarding the designated virtual volume 140 in the pair management table 112-19, such as the paired subsystem information 112-19-02, paired volume number information 112-19-03 and status 112-19-04. At 112-02-2-9, the CPU sends an "OK" message to the sender of the "Pair Create" request. The sender of the "Pair Create" request may be the other storage subsystem that includes the "Master" volume. After this step, the pair create program 112-02-2 ends at 112-02-2-10.

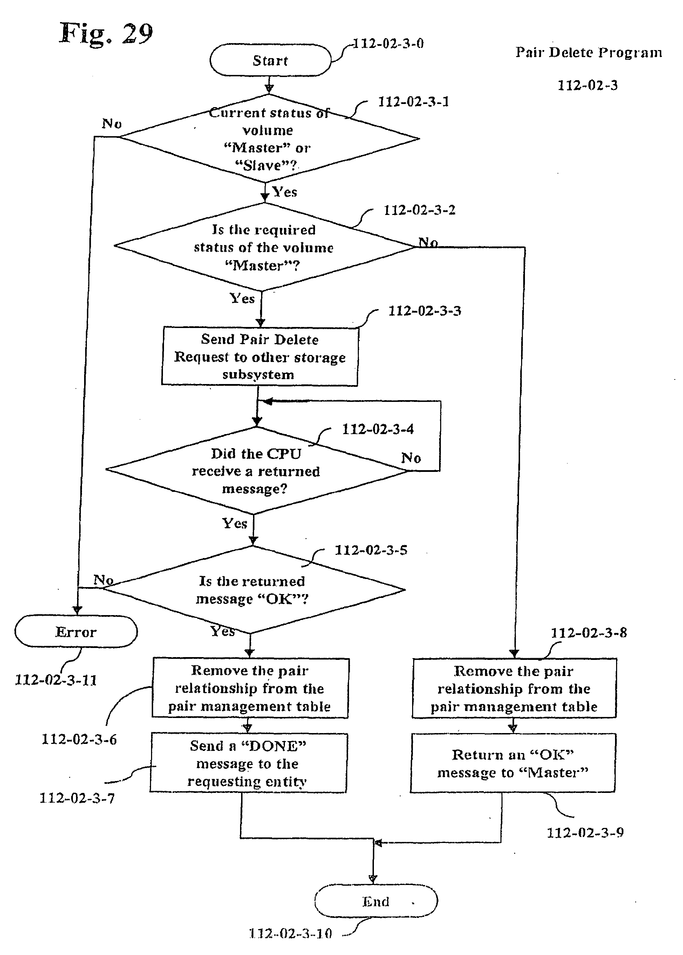

Figure 29 illustrates an exemplary method of conducting the pair delete program according to aspects of the present invention.

One exemplary method of conducting the pair delete program 112-02-3 of Figure 6 is shown in the flow chart of Figure 29. This method may be carried out by the CPU of either storage subsystem.

The method begins at 112-02-3-0. At 112-02-3-1, the method determines whether a designated virtual volume 140 has already been paired with another volume in a Master/Slave relationship. If the paired subsystem information 112-19-02, the paired volume number information 112-19-03 and the pair status information 112-19-04 of Figure 17 are set to "N/A," then the virtual volume has not been paired yet. If a pair does not exist for this volume, the method determines that an error has occurred at 112-02-3-11 because there is no pair to delete. If a pair exists, the method proceeds to step 112-02-3-2 where it checks the status of the designated virtual volume 140. Here, the method determines whether the required status of the designated volume is Master or not. If the status is determined as Master, the method proceeds to 112-02-3-3 where it sends a "Pair Delete" request to the other storage subsystem to request a release of the paired relationship between the designated volume and its Slave volume.

At 112-02-3-4, the method waits for the CPU to receive a returned message. At 112-02-3-5, the returned message is checked. If the message is "ok," the removal of the pairing information has been successful and the method proceeds to step 112-02-3-6. At 112-02-3-6 the method removes the information regarding the pair from the pair management table 112-19 including the paired subsystem information 112-19-02, paired volume number information 112-19-03 and the Master or Slave status 112-19-04. The method then proceeds to step 112-02-3-7 where a "done" message is sent to the sender of the "Pair Delete" request. The "Pair Delete" request is usually sent by the host computer 300, management terminal 130 or management terminal 430. At 112-02-3-10 the pair delete program 112-02-3 ends.

If at 112-02-3-2 the status is determined not to be a Master status then the status of the volume is Slave and the method proceeds to 112-02-3-8. At 112-02-3-8, the method removes the pairing relationship between the designated virtual volume 140 and its pair from the pair management table 112-19. This step involves removing the paired subsystem information 112-19-02, paired volume number information 112-19-03 and status 112-19-04 from the pair management table 112-19. At 112-02-3-9, the CPU sends an "OK" message to the sender of the "Pair Delete" request. The sender of the "Pair Delete" request may be the other storage subsystem that includes the "Master" volume. After this step, the pair delete program 112-02-3 ends at 112-02-3-10.

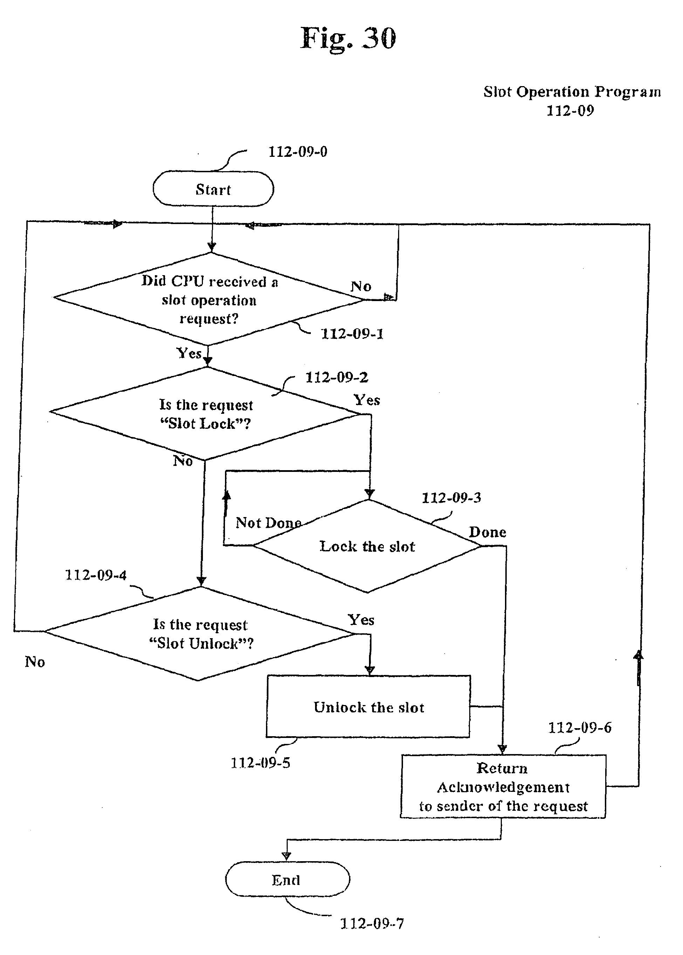

Figure 30 illustrates an exemplary method of conducting the slot operation program according to aspects of the present invention.

One exemplary method of conducting the slot operation program 112-09 of Figure 4 and Figure 5 is shown in the flow chart of Figure 30. This method, like the methods shown in Figures 26 and 27 may be carried out by the CPU of either storage subsystem.

The method begins at 112-09-0. At 112-09-1 the method determines whether a slot operation request has been received or not. If the request has been received, the method proceeds to step 112-09-2. If no such request has been received by the CPU 111, the method repeats the step 112-09-1. At 112-09-2, the method determines the type of the operation that is requested. If the CPU 111 has received a "slot lock" request, the method proceeds to step 112-09-3. If the CPU 111 did not receive a "slot lock" request, the method proceeds to step 112-09-4. At 112-09-3, the method tries to lock the slot by writing a "lock" status to the lock status column 112-18-05 in the cache management table 112-18. But, this cannot be done as long the status is already set to "lock." When the status is "lock," the CPU 111 waits until the status changes to "unlock." After the CPU finishes writing the "lock" status, the method proceeds to step 112-09-6 where an acknowledgement is sent to the request sender. After this step, the slot operation program ends at 112-09-7. At 112-09-4 the method checks the operation request that was received to determine whether a "slot unlock" request has been received. If the request is not a "slot unlock" request, the method returns to 112-09-1 to check the next request. If the request is a "slot unlock" request, the method proceeds to 112-09-5. At 112-09-5, the method writes the "unlock" status to the lock status column 112-18-05 of the cache management table 112-18. After it has finished writing the "unlock," status to the table the method proceeds to step 112-09-6 where an acknowledgement is returned to the request sender and the slot operation program ends at 112-09-7.

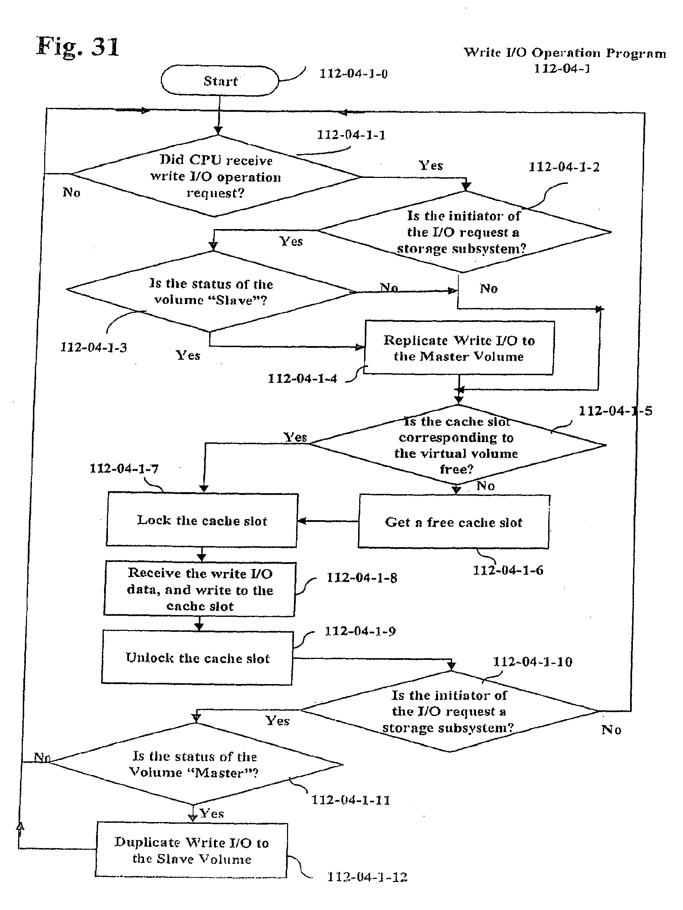

Figure 31 illustrates an exemplary method of conducting the write I/O operation program according to aspects of the present invention.

One exemplary method of conducting the write I/O operation program 112-04-1 of Figure 7 is shown in the flow chart of Figure 31. This method may be carried out by the CPU of either storage subsystem.

The method begins at 112-04-1-0. At 112-04-1-1, the method checks whether the received request is a write I/O request or not. If a write I/O request is not received, the method repeats step 112-04-1-1. If a write I/O request is received, the method proceeds to step 112-04-1-2. At 112-04-1-2, the method checks to determine the initiator who sent the write I/O request. Either the host computer 300 or one of the storage subsystems 100, 400 may be sending the request. If the request was sent by the host computer 300, the method proceeds to 112-04-1-5. If the request was sent by the other storage subsystem, the method proceeds to 112-04-1-3.

If the request was sent by one of the storage subsystems, at 112-04-1-3, the method checks the status of the virtual volume of the storage subsystem by referring to the pair status information. If the status is "Master" or "N/A," the method proceeds to step 112-04-1-5. If the status is "Slave," the method proceeds to step 112-04-1-4. At 112-04-1-4, the method replicates and sends the write I/O to paired virtual volume that is a Slave in the other storage subsystem. The write I/O target is determined by referring to the paired volume subsystem column 112-19-02 and the paired volume number column 112-19-03 in the pair management table 112-19 shown in Figure 17. Then, the method proceeds to step 112-04-1-5.

If the initiator of the request is the host computer 300 or one of the storage subsystems with a Master virtual volume status, the method reaches 112-04-1-5 directly, if the initiator is one of the storage subsystems with a Slave virtual volume status, the method goes through 112-04-1-4 before reaching 112-04-1-5. At 112-04-1-5, the method searches the cache management table 112-18 to find a cache slot 112-20-1 corresponding to the virtual volume for the I/O write data. These cache slots are linked to "Free," "Clean" or "Dirty" queues. If the CPU finds a free cache slot 112-20-1 then the method proceeds to step 112-04-1-7. If the CPU does not find a free cache slot 112-20-1 then the method proceeds to step 112-04-1-6. At 112-04-1-6, the method gets a cache slot 112-20-1 that is linked to the "Free" queue of cache management table 112-18 shown in Figure 18 and Figure 24 and then, the method proceeds to step 112-04-1-7.

At 112-04-1-7, the method tries to lock the slot by writing the "Lock" status to the lock status column 112-18-05 linked to the selected slot. When the status is "Lock," the CPUs cannot overwrite the slot and wait until the status changes to "Unlock." After writing the "Lock" status has ended, the CPU proceeds to step 112-04-1-8. At 112-04-1-8, the method transfers the write I/O data to the cache slot 112-20-1 from the host computer 300 or from the other storage subsystem. At 112-04-1-9, the method writes the "Unlock" status to the lock status column 112-18-05. After the CPU is done writing the "Unlock," the method proceeds to 112-04-1-10.

At 112-04-1-10, the method may check one more time to determine the initiator who sent the write I/O request. Alternatively this information may be saved and available to the CPU. If the host computer 300 sent the request, the method returns to 112-04-1-1. If one of the storage subsystems sent the request, the method proceeds to 112-04-1-11. At 112-04-1-11, the method checks the status of the virtual volume whose data will be written to the cache slot by referring to the pair status column of the pair management table 112-19 shown in Figure 17. If the status is set as "Slave" or "N/A," the method returns to step 112-04-1-1. If the status is "Master," the method proceeds to 112-04-1-12. At 112-04-1-12, the method replicates and sends the write I/O to the paired virtual volume in the other storage subsystem that would be the slave volume. The method finds the write I/O target by referring to the paired volume subsystem column 112-19-02 and the paired volume number column 112-19-03 of the pair management table 112-19. Then, the method returns to 112-04-1-1.

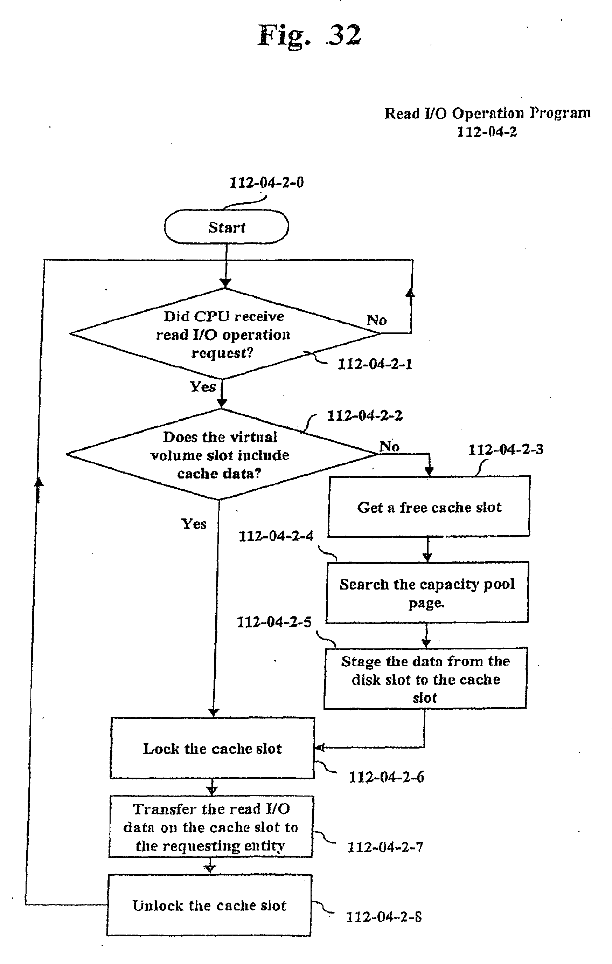

Figure 32 illustrates an exemplary method of conducting the read I/O operation program according to aspects of the present invention.

One exemplary method of conducting the write I/O operation program 112-04-2 of Figure 7 is shown in the flow chart of Figure 32. This method may be carried out by the CPU of either storage subsystem.

The method begins at 112-04-2-0. At 112-04-2-1, the method determines whether a read I/O request has been received or not. If a read request has not been received the method repeats step 112-04-2-1. If a read request was received then the method proceeds to step 112-04-2-2. At 112-04-2-2, the CPU 111 searches the cache management table 112-18 linked to "clean" or "dirty" queues to find the cache slot 112-18-1 of the I/O request. If the CPU finds the corresponding cache slot 112-18-1 then the method proceeds to step 112-04-2-6. If the CPU does not find a corresponding cache slot then the method proceeds to step 112-04-2-3. At 112-04-2-3, the method finds a cache slot 112-20-1 that is linked to "Free" queue of cache management table 112-18 and proceeds to step 112-04-2-4. At 112-04-2-4, the CPU 111 searches the virtual volume page management table 112-13 and finds the capacity pool page 121-2 to which the virtual volume page refers. The method then proceeds to step 112-04-2-5. At 112-04-2-5, the CPU 111 calls the cache staging program 112-05-2 to transfer the data from the disk slot 121-3 to the cache slot 112-20-1 as shown in Figure 24. After 112-04-2-5, the method proceeds to 112-04-2-6.

At 112-04-2-6, the CPU 111 attempts to write a "Lock" status to lock status column112-18-05 linked to the selected slot. When the status is "Lock," the CPU 111 and the CPU 411 cannot overwrite the slot and wait until the status changes to "Unlock." After it finishes writing the "Lock" status the method proceeds to step 112-04-2-7. At 112-04-2-7, the CPU 111 transfers the read I/O data from the cache slot 112-20-1 to the host computer 300 and proceeds to 112-04-2-8. At 112-04-2-8, the CPU 111 changes the status of the slot to unlock by writing the "Unlock" status to the lock status column 112-18-05. After the method is done unlocking the slot, it returns to 112-04-2-1 to wait for the next read I/O operation.

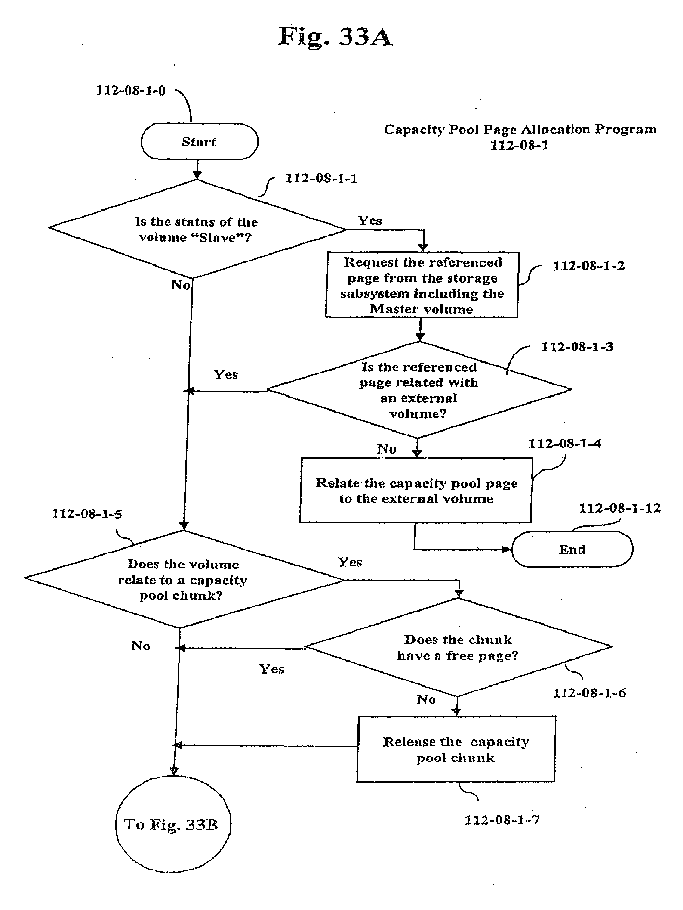

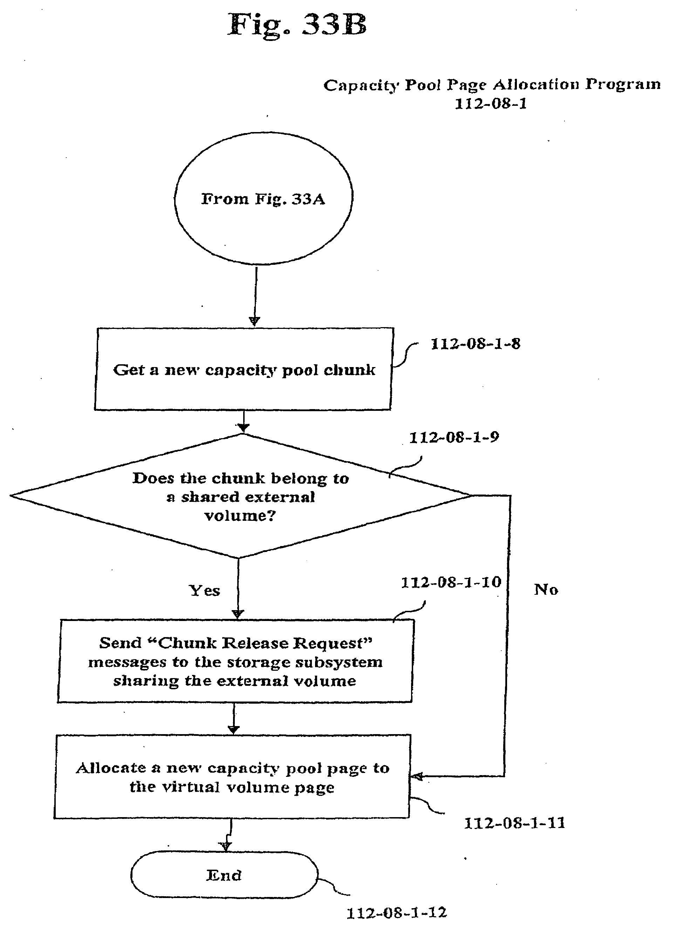

Figure 33A and Figure 33B show an exemplary method of conducting the capacity pool page allocation program according to aspects of the present invention.

One exemplary method of conducting the capacity pool page allocation program 112-08-1 of Figure 9 is shown in the flow chart of Figure 33A and Figure 33B. This method may be carried out by the CPU of either storage subsystem and is used to conduct capacity pool page allocation.

The method begins at 112-08-1-0. At 112-08-1-1, the method checks the status of the virtual volume 140 by referring to the pair status column 112-19-04 in the pair management table 112-19. If the status is "Master" or "N/A," the method proceeds to step 112-08-1-5. If the status is "Slave," the method proceeds to step 112-08-1-2. At 112-08-1-2, the method sends a request to the storage subsystem to which the Master volume belongs asking for a referenced capacity pool page. The method determines the storage subsystem by referring to the paired volume subsystem column 112-19-02 and the paired volume number column 112-19-03 in the pair management table 112-9. As such, the method obtains information regarding the relationship between the virtual volume page and the capacity pool page. Then, the method proceeds to 112-08-1-3. At 112-08-1-3, the method checks the source of the page by referring to the RAID level column 112-11-02 in the RAID group management table 112-11 of Figure 10. If in the table, the status of the RAID level is noted as "EXT," the page belongs to an external volume and the method proceeds to step 112-08-1-5. Otherwise, and for other entries in the RAID level column, the page belongs to internal volume, the method proceeds to step 112-08-1-4. At 112-08-1-4, the method sets the relationship between the virtual volume page and the capacity pool page according to the information provided in the virtual volume page management table 112-13 and capacity pool page management table 112-17. After this step, the method ends and CPU's execution of the capacity pool management program 112-08-1 stops at 112-08-1-12.

If the status of the storage subsystem including the referenced page is determined as "Master" or "N/A," the method proceeds to step 112-08-1-5. At 112-08-1-5, the method determines whether the external volume is related to a capacity pool chunk using the information in the RAID group and chunk being currently used by the capacity pool column 112-12-05 of the virtual volume management table 112-12 of Figure 11. If the entry in the current chunk column 112-12-05 is "N/A," the method proceeds to step 112-08-1-7. If the current chunk column 112-12-05 has an entry other than "N/A," the method proceeds to step 112-08-1-6. At 112-08-1-6, the method checks the free page size in the aforesaid capacity pool page. If a free page is found in the chunk, the method proceeds to step 112-08-1-8. If no free pages are found in the chunk, the method proceeds to step 112-08-1-7. At 112-08-1-7, the method releases an old capacity pool chunk by moving and connecting the capacity pool page management table 112-17 that the current chunk column 112-12-05 refers to and the used chunk queue index 112-15-04 in the capacity pool element management table 112-15 of Figure 16. Then, the method proceeds to step 112-08-1-8.

At 112-08-1-8, the method connects the capacity pool page management table 112-17, that the free chunk queue index 112-15-03 of the capacity pool element management table 112-15 is referring to, to the current chunk column 112-12-05. Then, the method proceeds to step 112-08-1-9.

At 112-08-1-9, the method checks whether the new capacity pool chunk belongs to a shared external volume such as the external volume 621 by reading the RAID level column 112-11-02 of the RAID group management table 112-11. If the status in the RAID level column is not listed as "EXT," the method proceeds to step 112-08-1-11. If the status in the RAID level column is "EXT," the method proceeds to step 112-08-1-10. At 112-08-1-10, the method sends a "chunk release" request message to other storage subsystems that share the same external volume for the new capacity pool chunk. The request message may be sent by broadcasting.

After 112-08-10 and also if the status in the RAID level column is not listed as "EXT," the method proceeds to step 112-08-1-11. At 112-08-1-11, the method allocates the newly obtained capacity page to the virtual volume page by setting the relationship between the virtual volume page and the capacity pool page in the virtual volume page management table 112-13 of Figure 12 and the capacity pool page management table112-17 of Figure 17. After this step, the method and the execution of the capacity pool management program 112-08-1 end at 112-08-12.

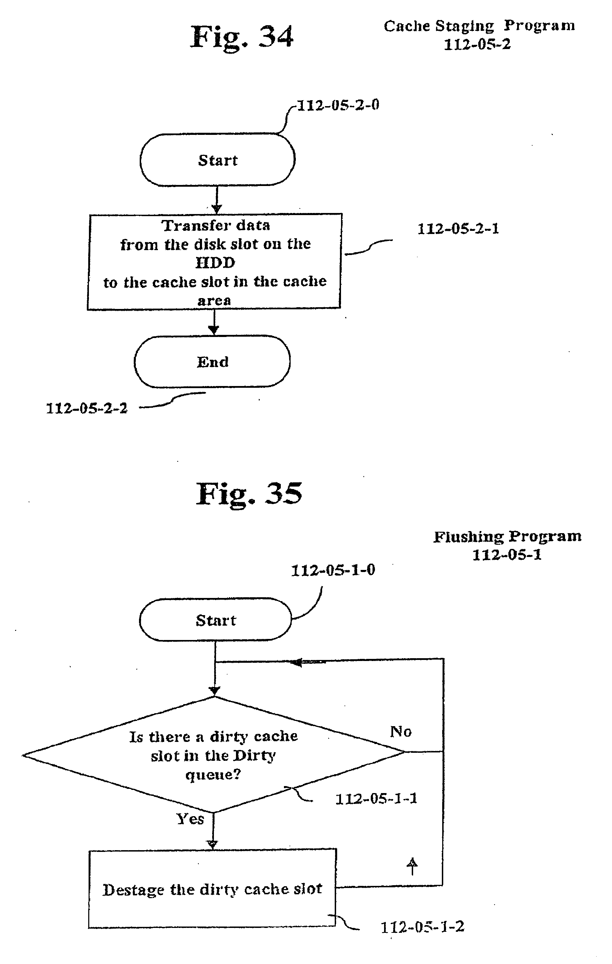

Figure 34 illustrates an exemplary method of conducting the cache staging program according to aspects of the present invention.

One exemplary method of conducting the cache staging program 112-05-2 of Figure 8 is shown in the flow chart of Figure 34. This method may be carried out by the CPU of either storage subsystem.

The method begins at 112-05-2-0. The cache staging method may include execution of the cache staging program 112-05-2 by the CPU. At 112-05-2-1 the method transfers the slot data from the disk slot 121-3 to the cache slot 112-20-1 as shown in Figure 24. The cache staging program ends at 112-05-2-2.

Figure 35 illustrates an exemplary method of conducting the disk flush program according to aspects of the present invention.

One exemplary method of conducting the disk flush program 112-05-1 of Figure 8 is shown in the flow chart of Figure 35. This method may be carried out by the CPU of either storage subsystem.

The method begins at 112-05-1-0. The disk flushing method may include execution of the disk flushing program 112-05-1 by the CPU. At 112-05-1-1, the method searches the "Dirty" queue of the cache management table 112-18 for cache slots. If a slot is found, the method obtains the first slot of the dirty queue that is a dirty cache slot, and proceeds to 112-05-1-2. At 112-05-1-2, the method calls the cache destaging program 112-05-3 and destages the dirty cache slot. After this step, the method returns to step 112-05-1-1 where it continues to search for dirty cache slots. Also, if at 112-05-1-1 no dirty cache slots are found, the method goes back to the same step of 112-05-1-1 to continue to look for such slots.

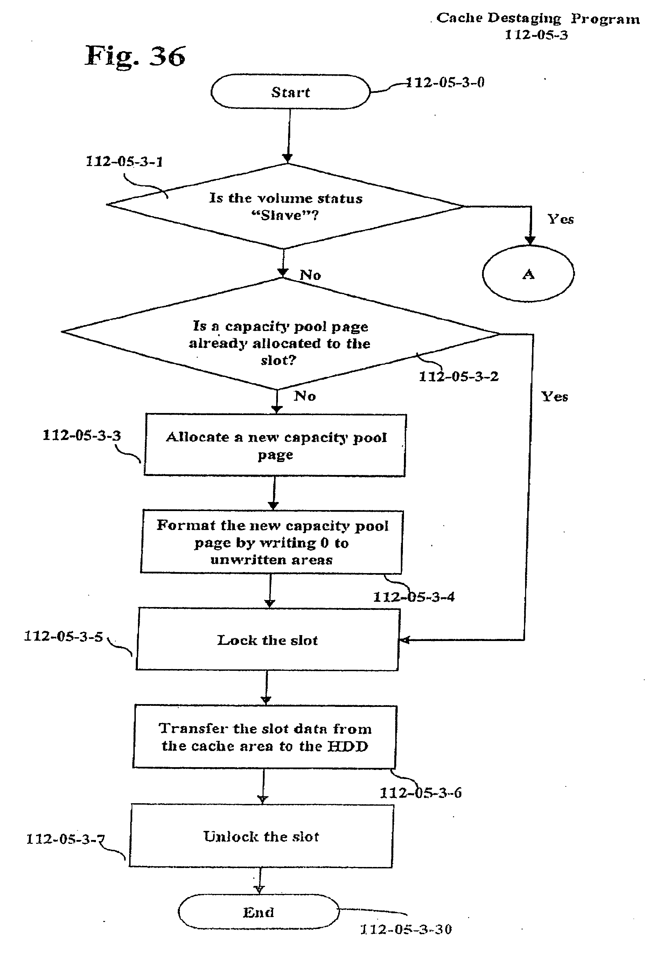

Figure 36, Figure 37 and Figure 38 show an exemplary method of conducting the cache destaging program according to aspects of the present invention.

One exemplary method of conducting the cache destaging program 112-05-3 of Figure 8 is shown in the flow chart of Figures 34A, 34B and 34C. This method may be carried out by the CPU of either storage subsystem.

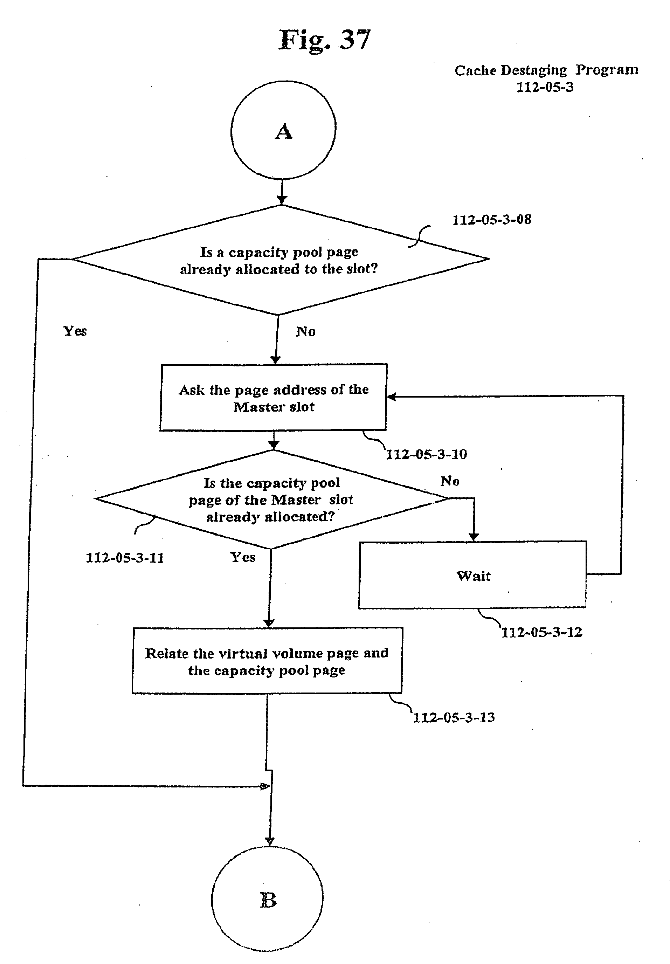

The method begins at 112-05-3-0. The method shown may be performed by execution of the cache destaging program 112-05-3 by the CPU. At 112-05-3-1 the method checks the status of the virtual volume 140 by referring to the status column 112-19-04 of the pair management table 112-19 of Figure 17. If the status is "Master" or "N/A," the method proceeds to step 112-05-3-8 in Figure 37. If the status is "Slave," the method proceeds to step 112-05-3-2. At 112-05-3-2, the method checks the status of the capacity pool allocation regarding the virtual volume page that includes the slot to be destaged. The method reads the related RAID group number 112-13-02 and the capacity pool page address 112-13-03 from the virtual volume page management table 112-13 of Figure 12. If the parameters are not "N/A," the method proceeds to step 112-05-3-5. If the parameters are "N/A," the method proceeds to step 112-05-3-3. At 112-05-3-3, the method calls the capacity pool page allocation program 112-08-1 to allocate a new capacity pool page to the slot and proceeds to step 112-05-3-4. At 112-05-3-4, the method fills "0" data to the slots of newly allocated page for formatting the page. The written areas of the page are not overwritten. The method then proceeds to 112-05-3-5. At 112-05-3-5, the method tries to write a "Lock" status to lock status column112-18-05 linked to the selected slot. Thereby the slot is locked. When the status is "Lock," the CPU cannot overwrite the data in the slot and wait until the status changes to "Unlock." After the method finishes writing the "Lock," status the method proceeds to step 112-05-3-6. At 112-05-3-6, the method transfers the slot data from the cache slot 112-20-1 to the disk slot 121-3 and proceeds to step 112-05-3-7. At 112-05-3-7 the method writes an "Unlock" status to the lock status column112-18-05. After it has finished writing "Unlock," the cache destaging program ends at 112-05-3-30.

If the status of the volume is Slave, the method proceeds from 112-05-3-1 to 112-05-3-8 where the method checks the status of the capacity pool allocation about the virtual volume page including the slot. The method reads the related RAID group number 112-13-02 and the capacity pool page address 112-13-03 in the virtual volume page management table 112-13. If the parameters are "N/A," the method proceeds to step 112-05-3-20. If the parameters are not "N/A," then there is a capacity pool page corresponding with a slot in the virtual volume and the method proceeds to step 112-05-3-10. At 112-05-3-10 the method determines the allocation status of the capacity pool page in the storage subsystem of the master volume. Here the method decides the storage subsystem by referring to the paired volume subsystem column 112-19-02 and the paired volume number column 112-19-03 in the pair management table 112-19 of Figure 17 and the method obtains the relationship between the virtual volume page and the capacity pool page. The method then proceeds to 112-05-3-11. At 112-05-3-11 the method checks the status of the capacity pool allocation of the virtual volume page including the slot by reading the related RAID group number 112-13-02 and capacity pool page address 112-13-03 from the virtual volume management table. If the parameters are "N/A," then there is no capacity pool page allocated to the Master slot and the method proceeds to step 112-05-3-12. At 112-05-3-12, the method sleeps for an appropriate length of time to wait for the completion of the allocation of the master and then goes back to step 112-05-3-10. If the parameters are not "N/A," and there is a capacity pool page allocated to the Master slot the method proceeds to step 112-05-3-13. At 112-05-3-13, the method sets the relationship between the virtual volume page and the capacity pool page of the master volume according to the information in the virtual volume page management table 112-13 and the capacity pool page management table 112-17. The method then proceeds to step 112-05-3-20.

At 112-05-3-20, the method sends a "slot lock" message to the storage subsystem of the master volume. After the method receives an acknowledgement that the message has been received, the method proceeds to step 112-05-3-21. At 112-05-3-21 the method asks regarding the slot status of the master volume. After the method receives the answer, the method proceeds to step 112-05-3-22. At 112-05-3-22, the method checks the slot status of the master volume. If the status is "dirty," the method proceeds to step 112-05-3-23. If the status is not "dirty," the method proceeds to step 112-05-3-27. At 112-05-3-23 the method attempts to lock the slot by writing a "lock" status to the lock status column 112-18-05 linked to the selected slot in the cache management table. When the status is "lock," the CPU cannot overwrite the slot by another "lock" command and waits until the status changes to "unlock." After the CPU has completed writing the "lock" status, the method proceeds to step 112-05-3-24. At 112-05-3-24, the method changes the slot status of the slave to "clean" and proceeds to step 112-05-3-25. At 112-05-3-25, the method writes the "unlock" status to the lock status column 112-18-05 of the cache management table and proceeds to step 112-05-3-26. At 112-05-3-26, the method sends a "slot unlock" message to the storage subsystem of the master volume. After the method receives the acknowledgement, the method ends the cache destaging program 112-05-3 at 112-05-3-30

If the master slot status is "dirty," then at 112-05-3-27 the method tries to write a "lock" status to lock status column112-18-05 linked to the selected slot. When the status is "lock," the CPU cannot overwrite this status by another "lock" command and waits until the status changes to "unlock." After it is done writing the "lock" status, the CPU proceeds to step 112-05-3-28. At 112-05-3-28 the method transfers the slot data from the cache slots 112-20-1 to the disk slots 121-3. After the transfer is complete, the method links the cache slots 112-20-1 to the "clean" queue of queue index pointer 112-18-12 in the cache management table 112-18 of Figure 18. The method then proceeds to step 112-05-3-26 and after sending an unlock request to the storage subsystem of the Master volume, the method ends at 112-05-3-30.

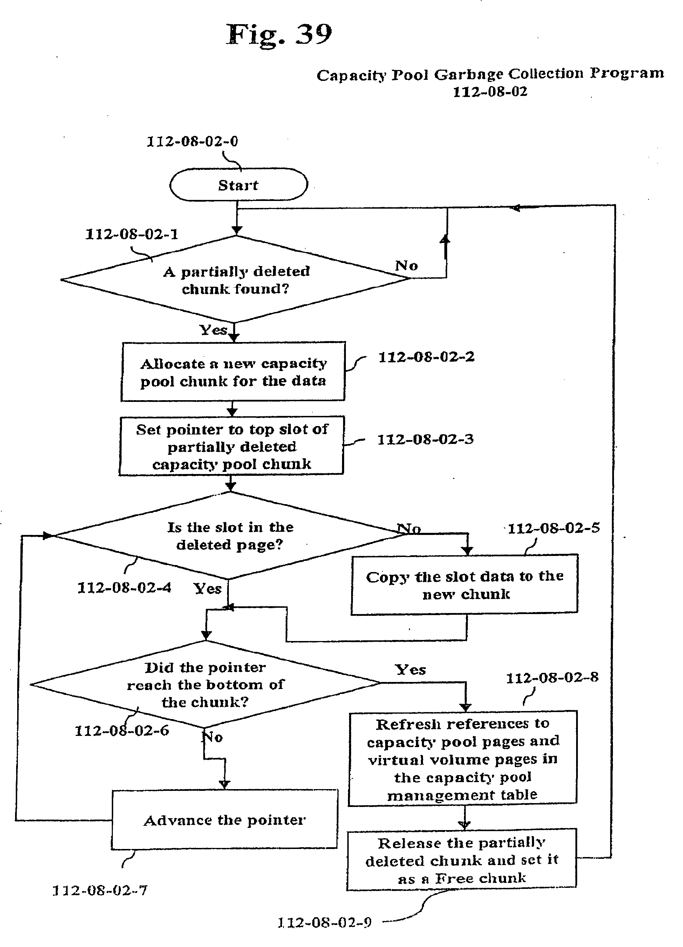

Figure 39 illustrates an exemplary method of conducting the capacity pool garbage collection program according to aspects of the present invention.

One exemplary method of conducting the capacity pool garbage collection program 112-08-2 of Figure 9 is shown in the flow chart of Figure 39. This method may be carried out by the CPU of either storage subsystem.

The method begins at 112-08-2-0. At 112-08-2-1, the method searches the capacity pool chunk management table 112-16 to find a chunk that is linked to the used chunk queue indexed by the capacity pool element management table 112-15. The method refers to the deleted capacity column 112-16-04 and checks whether the value corresponding to the chunk is more than 0, so the method treats this chunk as a "partially deleted chunk." If the method does not find the "partially deleted chunk," the method repeats step 112-08-2-1.

If the method finds a partially deleted chunk, the method proceeds to step 112-08-2-2. At 112-08-2-2, the method accesses the capacity pool chunk management table 112-16 that is linked to the "free chunk" queue indexed by the capacity pool element management table 112-15 to allocate a new capacity pool chunk 121-1 in place of the partially deleted chunk. Then, the method proceeds to step 112-08-2-3.

At 112-08-2-3, the method clears the pointers to repeat between step 112-08-2-4 and step 112-08-2-7. To clear the pointers, the method sets a pointer A to a first slot of the current allocated chunk and a pointer B to a first slot of the newly allocated chunk. Then, the method proceeds to step 112-08-2-4.

At step 112-08-2-4, the method determines whether a slot is in the deleted page of the chunk or not. To make this determination, the method reads the capacity pool page management table 112-17, calculates a page offset from the capacity pool page index 112-17-1 and checks the virtual volume page number 112-17-02. If the virtual volume page number 112-17-02 is "null" then the method proceeds to 112-08-2-6. If the virtual volume page number 112-17-02 is not "null" then the method proceeds to 112-08-2-5. At 112-08-2-5, the method copies the data from the slot indicated by the pointer A to the slot indicated by the pointer B. The method advances pointer B to the next slot of the newly allocated chunk. The method then proceeds to step 112-08-2-6.

At 112-08-2-6, the method checks pointer A. If pointer A has reached the last slot of the current chunk, then the method proceeds to step 112-08-2-8. If pointer A has not reached the last slot of the current chunk, then the method proceeds to step 112-08-2-7. At 112-08-2-7 the method advances pointer A to the next slot of the current chunk. Then, the method returns to step 112-08-2-4 to check the next slot.

If pointer A has reached the bottom of the chunk at 112-08-2-6, the method proceeds to 112-08-2-8. At 112-08-2-8, the method stores the virtual volume page 140-1 addresses of the slots copied to the capacity pool page management table 112-17 and changes the virtual volume page management table to include the newly copied capacity pool page 121-1 addresses and sizes. The method, then, proceeds to step 112-08-2-9. At 112-08-2-9, the method sets the current chunk, which is the partially deleted chunk that was found, to "free chunk" queue indexed by capacity pool element management table 112-15. Then, the method returns to step 112-08-2-1.

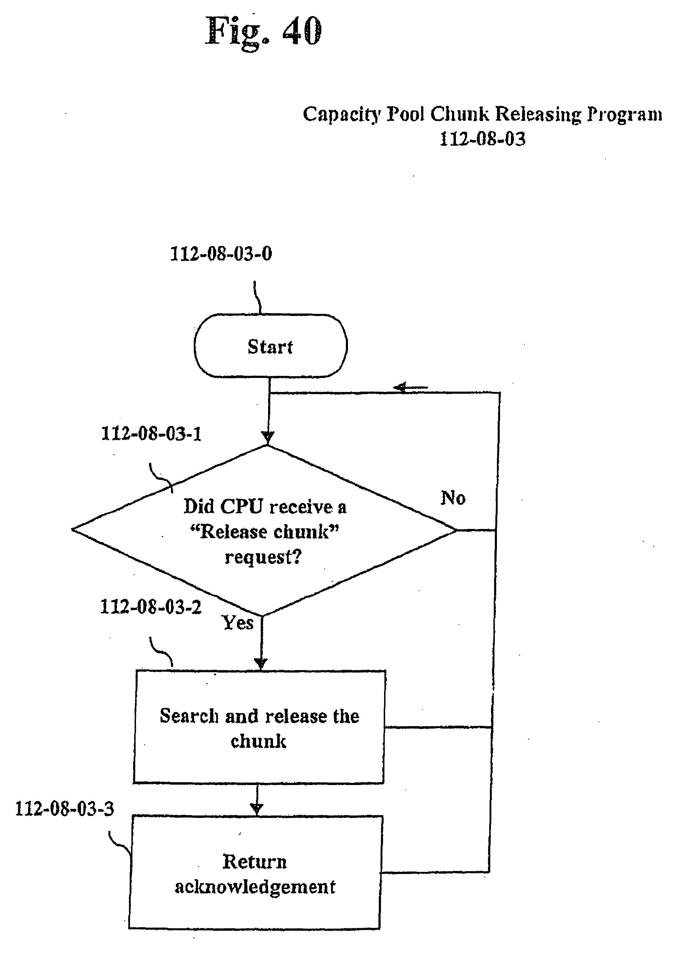

Figure 40 illustrates an exemplary method of conducting the capacity pool chunk releasing program according to aspects of the present invention.

One exemplary method of conducting the capacity pool chunk releasing program 112-08-3 of Figure 9 is shown in the flow chart of Figure 40. This method may be carried out by the CPU of either storage subsystem.

The method begins at 112-08-3-0. At 112-08-03-1, the method checks whether a "chunk release" operation request has been received or not. If a request has not been received, the method repeats step 112-08-3-1. If such a request has been received, the method proceeds to step 112-08-3-2. At 112-08-03-2 the method searches the capacity pool chunk management table 112-16 for the virtual volume that is linked to the "free chunk" queue indexed by the capacity pool element management table 112-15. The method sends the target virtual volume obtained from the capacity pool chunk management table 112-16 from the "free chunk" queue to the "omitted chunk" queue and proceeds to step 112-08-03-3. At 112-08-3-3 the method returns an acknowledgement to the "release chunk" operation request from the storage subsystem. Then, the method returns to step 112-08-03-1.

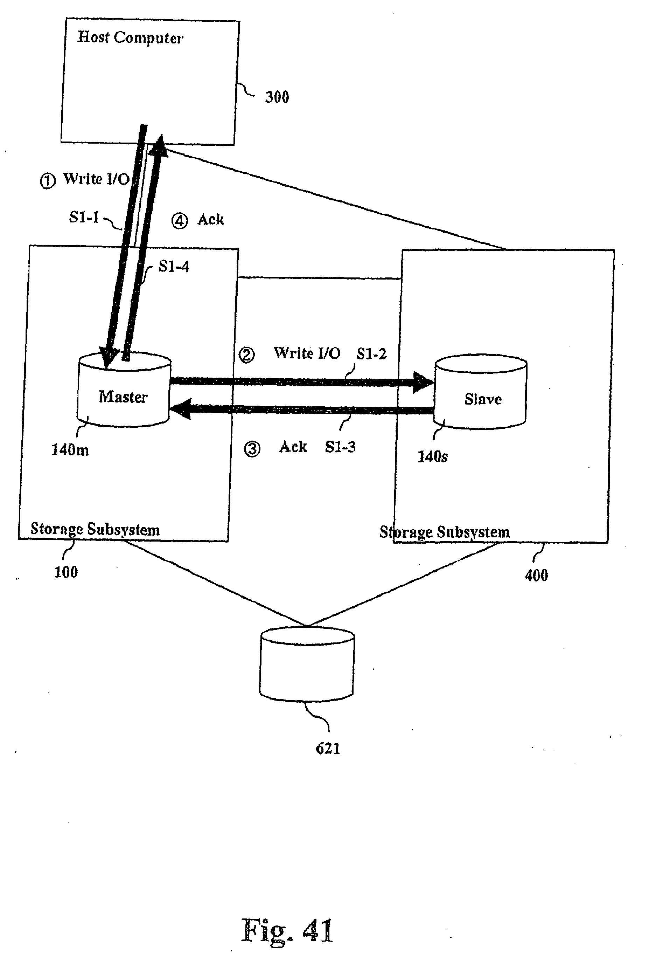

Figure 41, Figure 42, Figure 43 and Figure 44 show a sequence of operations of write I/O and destaging to master and slave volumes. In these drawings the virtual volume 140 of storage subsystem 100 operates in the "Master" status and is referred to as 140m and the virtual volume 140 of the storage subsystem 400 operates in the "Slave" status and is referred to as 140s. In these drawings the system of Figure 1 is simplified to show the host computer 300, the storage subsystems 100, 400 and the external volume 621. The master and slave virtual volumes are shown as 140m and 140s. In addition to the steps shown as S1-1, and the like, numbers appearing in circles next to the arrows show the sequence of the operations being performed.

Figure 41 provides a sequence of writing I/O to a master volume according to aspects of the present invention.

The sequence shown in Figure 41 corresponds to the write I/O operation program 112-04-1. At S1-1, the host computer 300 sends a write I/O request and data to be written to virtual volume 140m. The storage subsystem 100 stores the write I/O data to its cache slot. While this operation is running, the storage subsystem 100 locks the slot. At S1-2, after storing the write I/O data to its cache area, the storage subsystem 100 replicates this write I/O request and the associate data to be written to the virtual volume 140s at the storage subsystem 400. The storage subsystem 400 stores the write I/O data to its cache slot. While this operation is running, the storage subsystem 400 locks the slot. At S1-3, after storing the write I/O data to its cache area, the virtual storage subsystem 400 returns and acknowledgement message to the storage subsystem 100. At S1-4, after the receiving aforesaid acknowledgement from the storage subsystem 400, the virtual storage subsystem 100 returns the acknowledgement to the host computer 300.

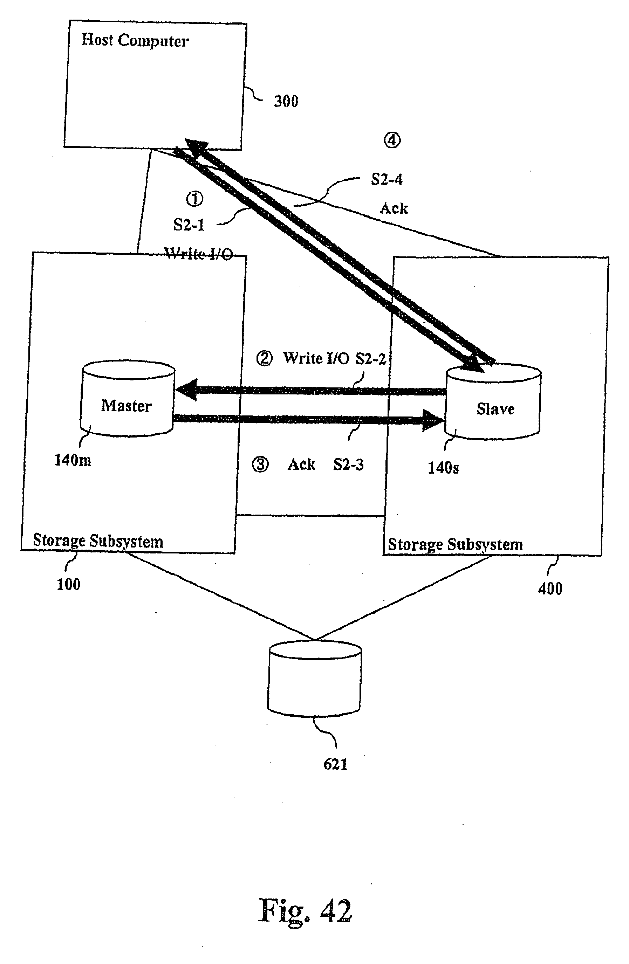

Figure 42 provides a sequence of writing I/O to a slave volume according to aspects of the present invention.

The sequence shown in Figure 42 also corresponds to the write I/O operation program 112-04-1. At S2-1, the host computer 300 sends a write I/O request and the associated data to the virtual volume 140s. At S2-2, the storage subsystem 400 replicates and sends the received write I/O request and associated data to the virtual volume 140m. The storage subsystem 100 stores the write I/O data to its cache slot. While this operation is running, the storage subsystem 100 locks the slot. At S2-3, after storing the write I/O data to its cache slot, the virtual storage subsystem 100 returns an acknowledgment to the storage subsystem 400. After the storage subsystem 400 receives the aforesaid acknowledgment, the storage subsystem 400 stores the write I/O data to its cache slot. While this operation is running, the storage subsystem 100 locks the slot. At S2-4, after the storing of write I/O data to its cache area, the virtual storage subsystem 400 returns an acknowledgement to the host computer 300.

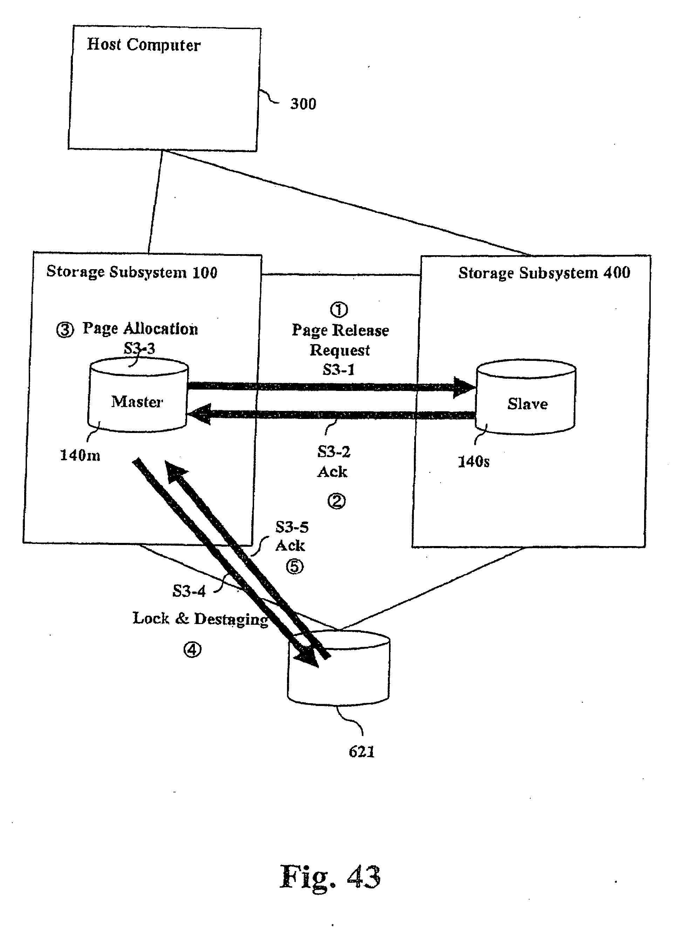

Figure 43 provides a sequence of destaging to an external volume from a master volume according to aspects of the present invention.

The sequence shown in Figure 43 corresponds to the cache destaging program 112-05-3. At S3-1, the storage subsystem 100 finds a dirty cache slot that is in an unallocated virtual volume page, obtains a new capacity pool chunk at the external volume 621 for the allocation and sends a "page release" request to the storage subsystem 400. At S3-2, the storage subsystem 400 receives the request and searches and omits the shared aforesaid capacity pool chunk that was found to be dirty. After the omission is complete, the storage subsystem 400 returns an acknowledgement to the storage subsystem 100. Next at S3-3, after the storage subsystem 100 receives the acknowledgement of the omission, the storage subsystem 100 allocates the new capacity pool page to the virtual volume page from aforesaid capacity pool chunk. Then, at S3-4 after the allocation operation ends, the storage subsystem 100 transfers the dirty cache slot to external volume 621 and during this operation, the storage subsystem 100 locks the slot. Then, at S3-5, after transferring the dirty cache slot, the storage subsystem 100 receives an acknowledgement from the external volume 621. After it receives the acknowledgement, the storage subsystem 100 changes the slot status from dirty to clean and unlocks the slot.

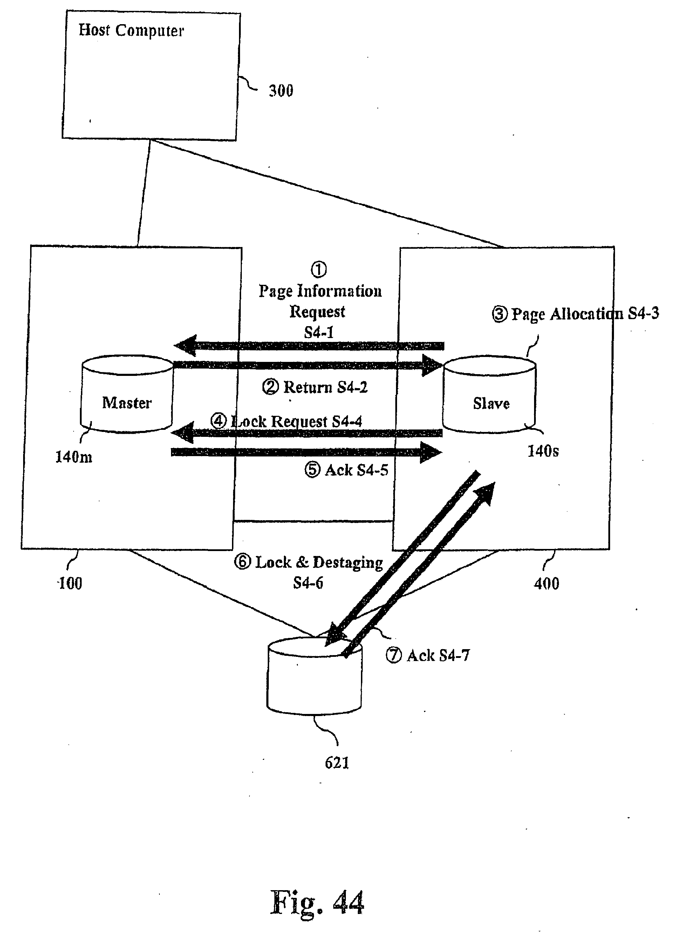

Figure 44 provides a sequence of destaging to an external volume from a slave volume according to aspects of the present invention.

The sequence shown in Figure 44 also corresponds to the cache destaging program 112-05-3.

At S4-1, the storage subsystem 400 finds a dirty cache slot that is in an unallocated virtual volume page. The storage subsystem 400 asks the storage subsystem 100 regarding the status of capacity pool page allocation at the virtual volume 140m. At S4-2, following the request, the storage subsystem 100 reads the relationship between the virtual volume page and the capacity pool page from the capacity pool page management table 112-17 and sends an answer to the storage subsystem 400. At S4-3 following receiving the answer, the storage subsystem 400 allocates a virtual volume page to the same capacity pool page at the virtual volume 140s. Next at S4-4, the storage subsystem 400 sends a "lock request" message to the storage subsystem 100. At S4-5, the storage subsystem 100 receives the message and locks the target slot that is in the same area as the aforesaid dirty slot of the virtual volume 140s. After locking the slot, the storage subsystem 100 returns an acknowledgement and the slot status of virtual volume 140m to the storage subsystem 400. At S4-6, after the acknowledgment returns, the storage subsystem 400 transfers the dirty cache slot to external volume 621 if the slot status of virtual volume 140m is dirty. During this operation, the storage subsystem 100 locks the slot. At S4-7, after transferring the dirty cache slot, the storage subsystem 400 receives an acknowledgement from the external volume 621. After receiving the acknowledgement, the storage subsystem 100 changes the slot status from dirty to clean and unlocks the slot.

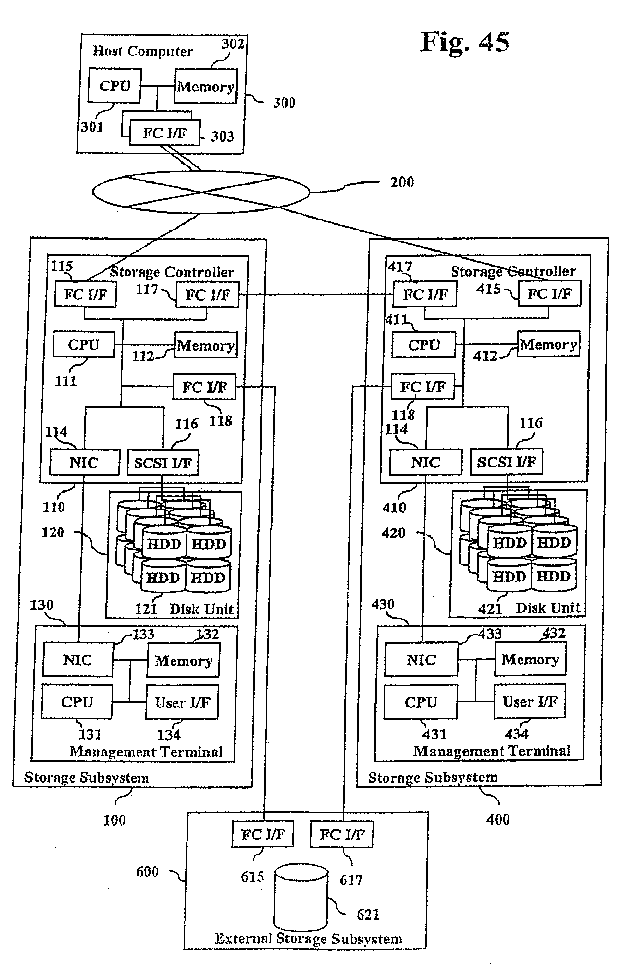

Figure 45 illustrates a storage system according to other aspects of the present invention.

The storage system shown in Figure 45 is similar to the storage system shown in Figure 1 in that it also includes two or more storage subsystems 100, 400 and a host computer 300. However, the storage system shown in Figure 45 includes an external storage subsystem 600 instead of the external volume 621. The storage system of Figure 45 may also include one or more storage networks 200. The storage subsystems 100, 400 may be coupled together directly. The host computer may be coupled to the storage subsystems 100, 400 directly or through the storage network 200. The external storage subsystem 600 may be coupled to the storage subsystem 100, 400 directly.

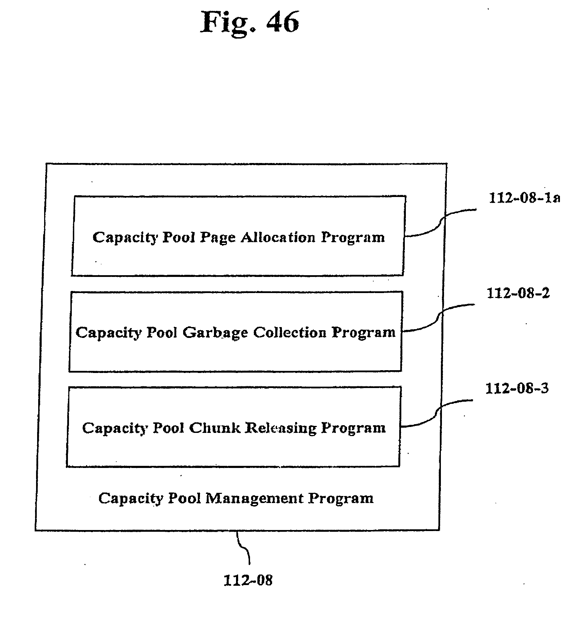

Figure 46 illustrates an exemplary structure for another capacity pool management program stored in storage subsystems 100 and 400 according to other aspects of the present invention.

One exemplary structure for the capacity pool management program 112-08 includes a capacity pool page allocation program 112-08-1a, the capacity pool garbage collection program 112-08-2 and capacity pool extension program 112-08-3. When compared to the capacity pool management program 112-08 of Figure 9, the program shown in Figure 46 includes the capacity pool page allocation program 112-08-1a instead of the capacity pool page allocation program 112-08-1.

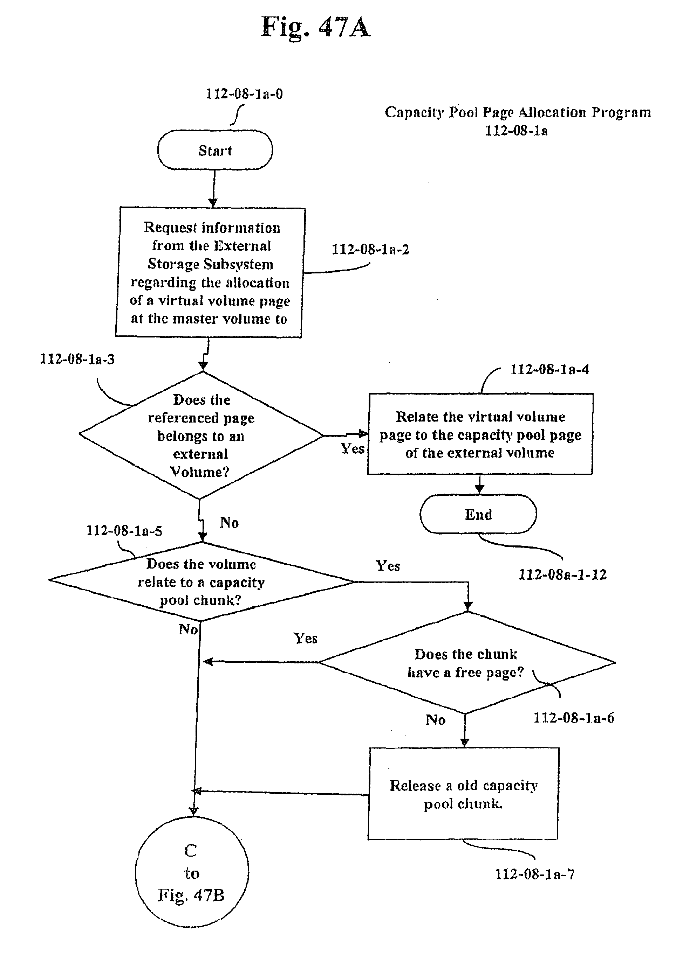

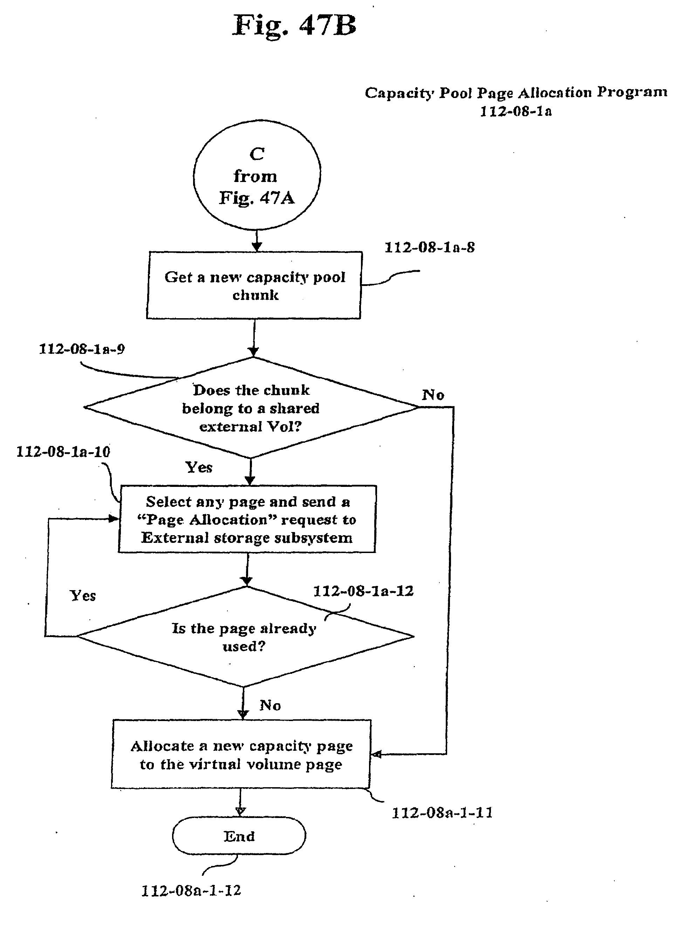

Figure 47A and Figure 47B show an exemplary method of conducting a capacity pool page allocation according to other aspects of the present invention.

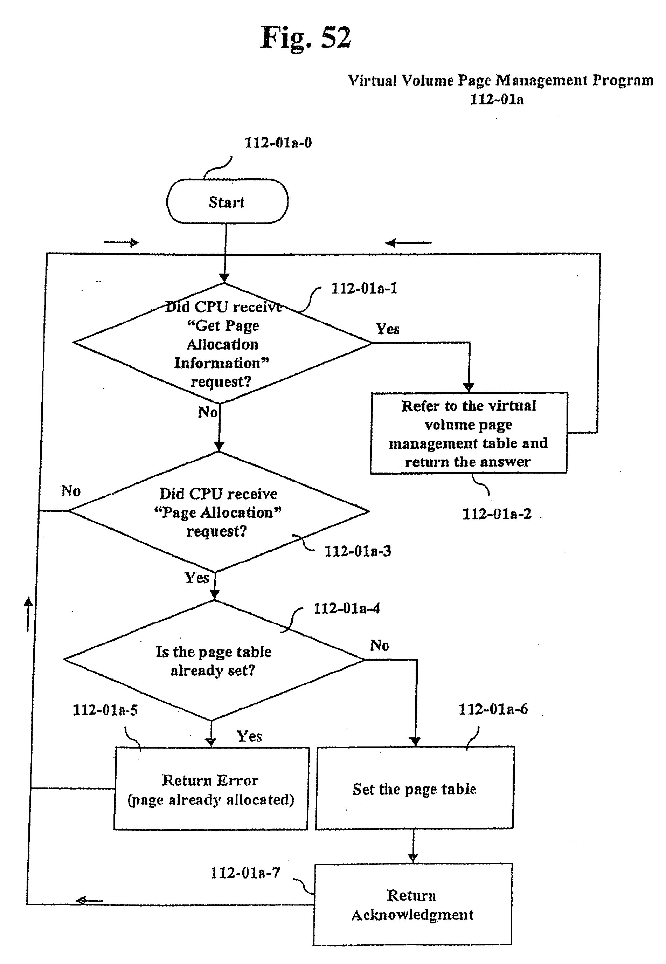

One exemplary implementation of the capacity pool management allocation program 112-08-1a is shown in the flow chart of Figure 52. This program may be executed the CPU 111, 411 of the storage subsystems 100 and 400.

The method begins at 112-08-1a-0. At 112-08-1a-2, CPU of one of storage subsystems, such as the CPU 111, sends a "get page allocation information" request from the storage subsystem 100 to the external storage subsystem 600. The page allocation information pertains to allocation of the virtual volume page of the master volume. After the CPU 111 receives the answer from the external storage subsystem 600, the method proceeds to 112-08-1a-3.

At 112-08-1 a-3, the CPU 111 checks the answer that it has received from the external storage subsystem. If the answer is "free," then the requested page does not belong to an external storage volume and the CPU 111 proceeds to step 112-08-1a-5. If the answer is a page number and a volume number, then the requested page is already allocated to an external storage system and the CPU 111 proceeds to step 112-08-1a-4. At step 112-08-1a-4 the CPU 111 sets the relationship information between the virtual volume page and the capacity pool page according to the virtual volume page management table 112-13a and the capacity pool page management table112-17. After this step, the CPU 111 ends the capacity pool page allocation program 112-08-1 a at 112-08-1a-12.

When the requested page is not already allocated to an external volume, at step 112-08-1a-5 the CPU 111 refers to the capacity pool page management table 112-17 row that is referenced by the RAID group & chunk currently being used by the capacity pool column 112-12-05 of the virtual volume management table 112-05 to determine if a volume is allocated to a chunk. If the currently used chunk column 112-12-05 is "N/A," then there is no volume allocated to the chunk and the CPU 111 proceeds to step 112-08-1a-8. If the currently being used chunk column 112-12-05 is not set to "N/A," the method proceeds to step 112-08-1a-6. At 112-08-1a-6 the CPU 111 checks the free page size in the aforesaid capacity pool page. If there is free page available, the method proceeds to step 112-08-1a-8. If there is no free page available, the method proceeds to step 112-08-1a-7. At 112-08-1a-7 the methods releases an old capacity pool chunk by moving and connecting the capacity pool page management table 112-17, that is referred to by the currently being used chunk column 112-12-05, to the used chunk queue index 112-15-04 of the capacity pool element management table 112-15. Then, the method moves to 112-08-1a-8.

At 112-08-1a-8 the method obtains a new capacity pool chunk by moving and connecting the capacity pool page management table 112-17, that is being referenced by the free chunk queue index 112-15-03, to the currently being used chunk column 112-12-05. Then, the method proceeds to step 112-08-1a-9.

At 112-08-1a-9, the CPU 111 checks to determine whether the new capacity pool chunk belongs to the external volume 621 or not by reading the RAID level column 112-11-02. If the status is not "EXT," the method proceeds to step 112-08-1a-11. If the status is "EXT," then the new capacity pool chunk does belong to the external volume and the method proceeds to step 112-08-1a-10. At 112-08-1a-10, the method selects a page in the new chunk and sends a "page allocation" request about the selected page to the external storage subsystem. After the CPU 111 receives the answer, the method proceeds to step 112-08-1 a-12. At 112-08-1a-12 the CPU 111 checks the answer that is received. If the answer is "already allocated," the method returns to step 112-08-1a-10. If the answer is "success," the method proceeds to step 112-08-1a-11. At 112-08-1a-11, the CPU 111 sets the relationship between the virtual volume page and the capacity pool page in the virtual volume page management table 112-13 and the capacity pool page management table112-17. After this step, the capacity pool page allocation program 112-08-1a ends at 112-08-1a-11.

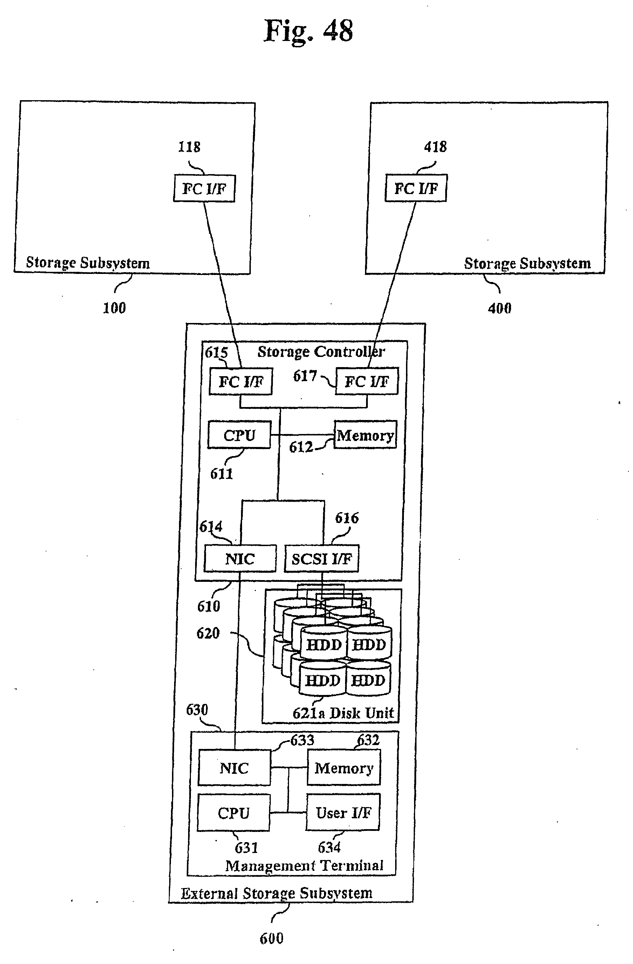

Figure 48 illustrates an external storage subsystem according to other aspects of the present invention.

The external storage subsystem 600 is shown in further detail in Figure 48. The storage subsystem 600 includes a storage controller 610, a disk unit 620 and a management terminal 630.

The storage controller 610 includes a memory 612 for storing programs and tables in addition to stored data, a CPU 611 for executing the programs that are stored in the memory, a disk interface 616, such as SCSI I/F, for connecting to a disk unit 621a, parent storage interfaces 615, 617, such as Fibre Channel I/F, for connecting the parent storage interface 615 to an external storage interface 118, 418 at one of the storage subsystems, and a management terminal interface 614, such as NIC/IF, for connecting the disk controller to storage controller interface 633 at the management terminal 630. The parent storage interface 615 receives I/O requests from the storage subsystem 100 and informs the CPU 611 of the requests. The management terminal interface 616 receives volume, disk and capacity pool operation requests from the management terminal 630 and informs the CPU 611 of the requests.

The disk unit 620 includes disks 621a, such as HDD.

The management terminal 630 includes a CPU 631, for managing processes of the management terminal 630, a memory 632, a storage controller interface 633, such as NIC, for connecting the storage controller to the management terminal interface 614, and a user interface such as keyboard, mouse or monitor. The storage controller interface 633 sends volume, disk and capacity pool operation to storage controller 610. The storage controller 610 provides the external volume 621 which is a virtual volume for storage of data.

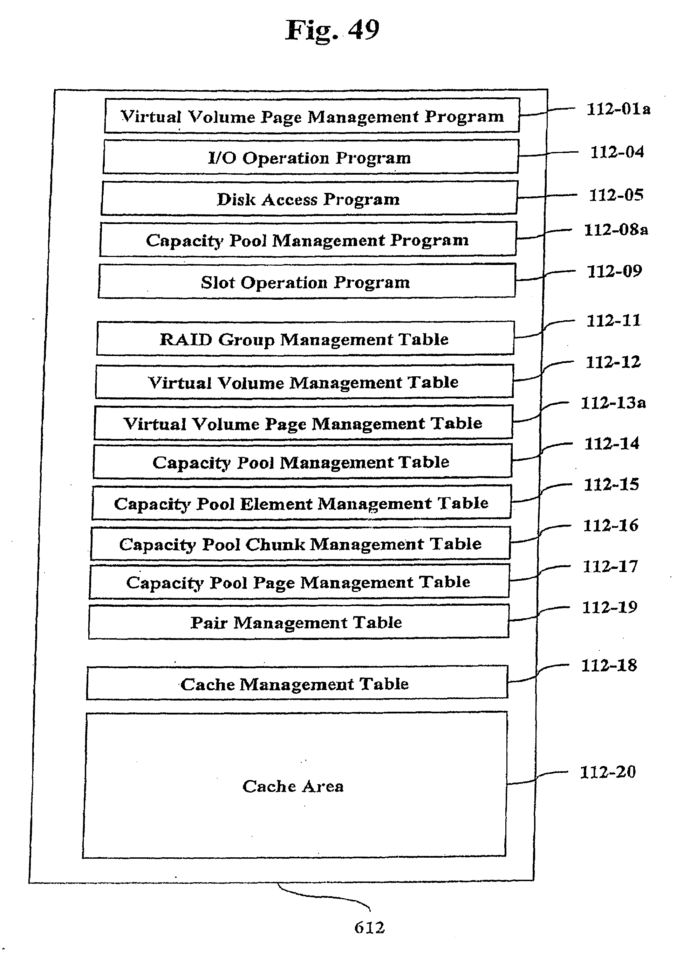

Figure 49 illustrates an exemplary structure for a memory of an external storage subsystem according to other aspects of the present invention.

One exemplary structure for the memory 612 of external volume 600 is shown in Figure 49. The memory includes a virtual volume page management program 112-01 a, an I/O operation program 112-04, a disk access program 112-05, a capacity pool management program 112-08a, a slot operation program 112-09, a RAID group management table 112-11, a virtual volume management table 112-12, a virtual volume page management table 112-13a, a capacity pool management table 112-14, a capacity pool element management table 112-15, a capacity pool chunk management table 112-16, a capacity pool page management table 112-17, a pair management table 112-19, a capacity pool page management table 112-17, a cache management table 112-18 and a cache area 112-20.

The virtual volume page management program 112-01 a runs when the CPU 611 receives a "page allocation" request from one of the storage subsystems 100, 400. If the designated page is already allocated, the CPU 611 returns the error message to the requester. If the designated page is not already allocated, the CPU 611 stores the relationship between the master volume page and the designated page and returns a success message. The virtual volume page management program 112-01a is a system residence program.

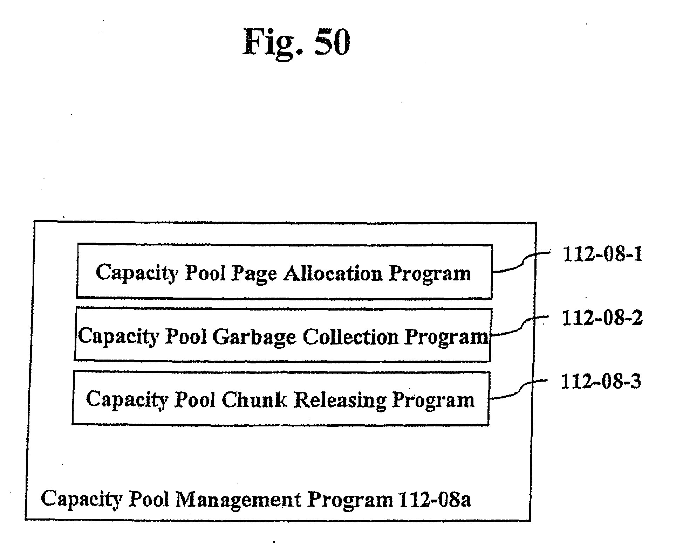

Figure 50 illustrates a capacity pool management program 112-08 stored in the memory 412 of the storage controller.

This program is similar to the program shown in Figure 9.

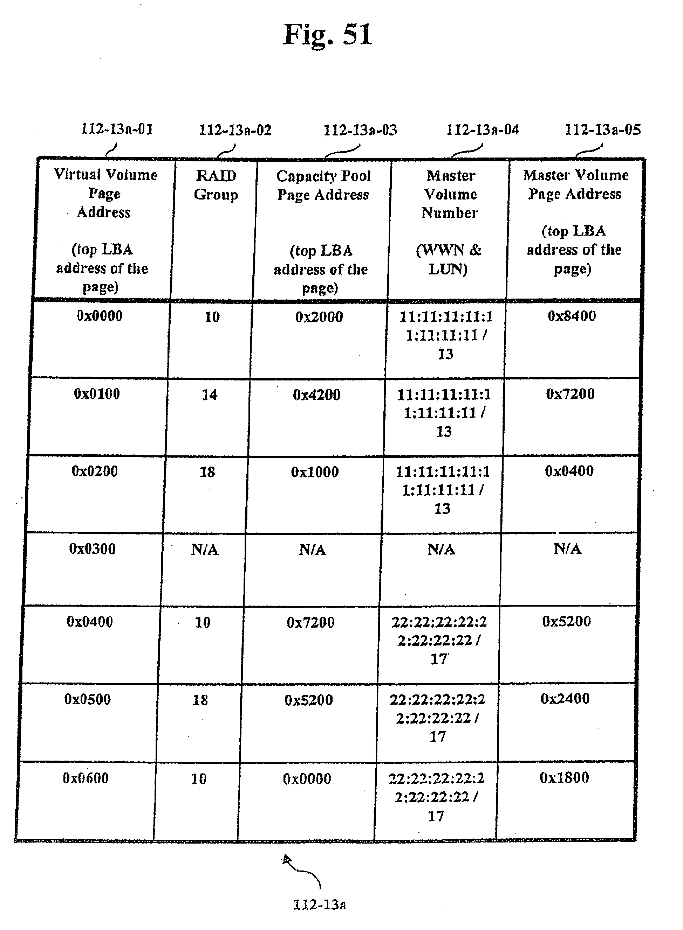

Figure 51 illustrates an exemplary structure for a virtual volume page management table according to other aspects of the present invention.

One exemplary structure for the virtual volume page management table 112-13a includes a virtual volume page address 112-13a-01, a related RAID group number 112-13a-02, a capacity pool page address 112-13a-03, a master volume number 112-13a-04 and a master volume page address 112-13a-05.

The virtual volume page address 112-13a-01 includes the ID of the virtual volume page in the virtual volume. The related RAID group number 112-13a-02 includes either a RAID group number of the allocated capacity pool page including the external volume 621 or "N/A" which means that the virtual volume page is not allocated a capacity pool page in the RAID storage system. The capacity pool page address 112-13a-03 includes either the logical address of the related capacity pool page or the start address of the capacity pool page. The master volume number 112-13a-04 includes either an ID of the master volume that is linked to the page or "N/A" which means that the virtual volume page is not linked to other storage subsystems. The master volume page address 112-13a-05 includes either the logical address of the related master volume page or "N/A" which means that the virtual volume page is not linked to other storage subsystems.

Figure 52 illustrates an exemplary method of conducting a virtual volume page management according to other aspects of the present invention.

One exemplary method of implementing the virtual volume page management program 112-1 a is shown. This program may be executed by the CPU 611 of the external storage subsystem 621.

The method begins at 112-01a-0. At 112-01a-1, the method determines whether a "get page allocation information" request has been received at the external storage subsystem or not. If such a message has not been received, the method proceeds to step 112-01a-3. If the CPU 611 has received this message, the method proceeds to step 112-01a-2.

At 112-01a-2, the method checks the virtual volume page management table 112-13a regarding the designated requested page. If the master volume number 112-13a-04 and the master volume page address 112-13a-05 are both "N/A, the method returns the answer "free" to the requested storage subsystem. If the master volume number 112-13a-04 and the master volume page address 112-13a-05 are not "N/A," the method returns the values of master volume number 112-13a-04 and master volume page address 112-13a-05 to the requesting storage subsystem. After sending the answer, the method returns to step 112-01a-1 for the next request.

If a page allocation information request message has not been received, at 112-01a-3 the method determines a "page allocation" request has been received. If not, the method returns to 112-01a-1. If such a message has been received, the method proceeds to step 112-01 a-4. At 112-01 a-4, the method checks the virtual volume page management table 112-13a about the designated page. If related RAID group number 112-13a-02, capacity pool page address 112-13a-03, master volume number 112-13a-04 and master volume page address 112-13a-05 are "N/A, page allocation has not been done and the method proceeds to step 112-01a-6. At 112-01a-6, the method stores the designated values to the master volume number 112-13a-04 and the master volume page address 112-13a-05 and proceeds to step 112-01a-7 where it sends the answer "success" to the requesting storage subsystem to acknowledge the successful completion of the page allocation. Then the method returns to step 112-01a-1.

If related RAID group number 112-13a-02, capacity pool page address 112-13a-03, master volume number 112-13a-04 and master volume page address 112-13a-05 are not "N/A, page allocation has been done and the method proceeds to 112-01a-5. At 112-01a-5, the method returns the answer "page already allocated" to the requesting storage subsystem and returns to 112-01 a-1.

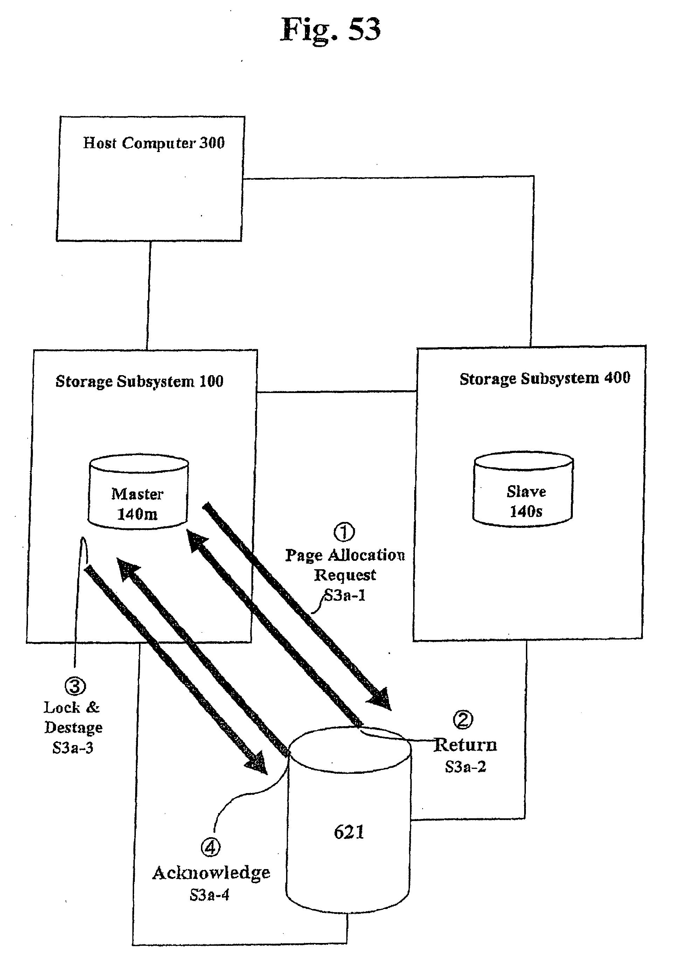

Figure 53 illustrates an exemplary sequence of destaging to the external volume from the master volume according to other aspects of the present invention.

In the exemplary destaging sequence shown, the virtual volume 140 of storage subsystem 100 operates as the "Master" volume 140m and the virtual volume 140 of the storage subsystem 400 operates as the "Slave" volume 140s. The sequence shown in Figure 53 is one exemplary method of implementing the cache destaging program 112-05-3 that resides in the memory of the storage controller and shows a sequence of destaging a page from the master virtual volume 140m to the external storage subsystem 621.

First, at S3a-1 the storage subsystem 100 finds a dirty cache slot that is in the unallocated virtual volume page. The storage subsystem 100 sends a request to the external storage subsystem 600 to allocate a new page. Second, at S3a-2 the external storage subsystem 600 receives the request and checks and allocates a new page. After the operation is complete, the external storage subsystem 600 returns an acknowledgement to the storage subsystem 100. Third, at S3a-3 after the allocation operation ends, the storage subsystem 100 transfers the dirty cache slot to the external volume 621. During this operation, storage subsystem 100 locks the slot. Fourth and last, at S3a-4 after the transfer, the storage subsystem 100 receives an acknowledgment from the external storage subsystem 600. After it receives the acknowledgement, the storage subsystem 100 changes the slot status from dirty to clean and unlocks the slot.

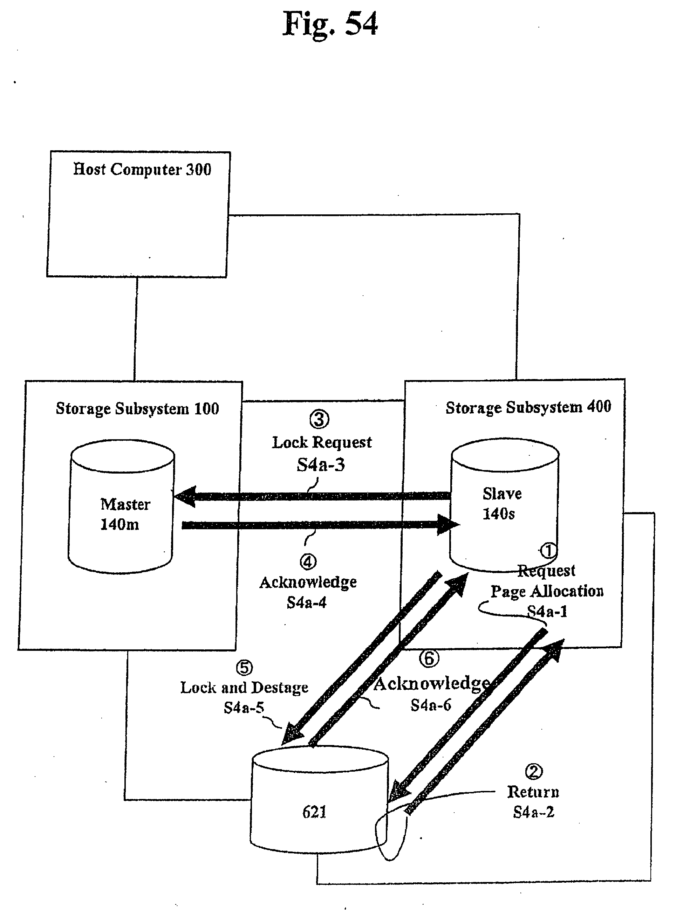

Figure 54 illustrates an exemplary sequence of destaging to the external volume from the slave volume according to other aspects of the present invention.

In the exemplary destaging sequence shown, the virtual volume 140 of storage subsystem 100 operates as the "Master" volume 140m and the virtual volume 140 of the storage subsystem 400 operates as the "Slave" volume 140s. The sequence shown in Figure 54 is one exemplary method of implementing the cache destaging program 112-05-3 that resides in the memory of the storage controller and shows a sequence of destaging a page from the slave virtual volume 140s to the external storage subsystem 621.

First, at S4a-2 the storage subsystem 400 including the slave virtual volume 140s finds a dirty cache slot that is in an unallocated virtual volume page. The storage subsystem 400 requests from the external storage subsystem 600 to allocate a new page to the date in this slot. Second, at S4a-2 the external storage subsystem 600 receives the request and checks and allocates new page. After the allocation operation is complete, the external storage subsystem 600 returns an acknowledgement to the storage subsystem 400. Third, at S4a-3 the storage subsystem 400 sends a "lock request" message to the storage subsystem 100. Fourth, at S4a-4 the storage subsystem 100 receives the lock request message and locks the target slot at the master virtual volume 140m that corresponds to the dirty slot of the virtual volume 140s. After the storage subsystem 100 locks the slot, the storage subsystem 100 returns an acknowledgement message and the slot status of virtual volume 140m to the slave virtual volume 140s at the storage subsystem 400. Fifth, at S4a-5 after the allocation operation ends, the storage subsystem 400 transfers the dirty cache slot to the external volume 621 and during this destage operation, the storage subsystem 400 locks the slot. Sixth, at S4a-6 after the transfer, the storage subsystem 400 receives an acknowledgement message from the external storage subsystem 600. After it receives the acknowledgement message, the storage subsystem 400 changes the slot status from dirty to clean and unlocks the slot.

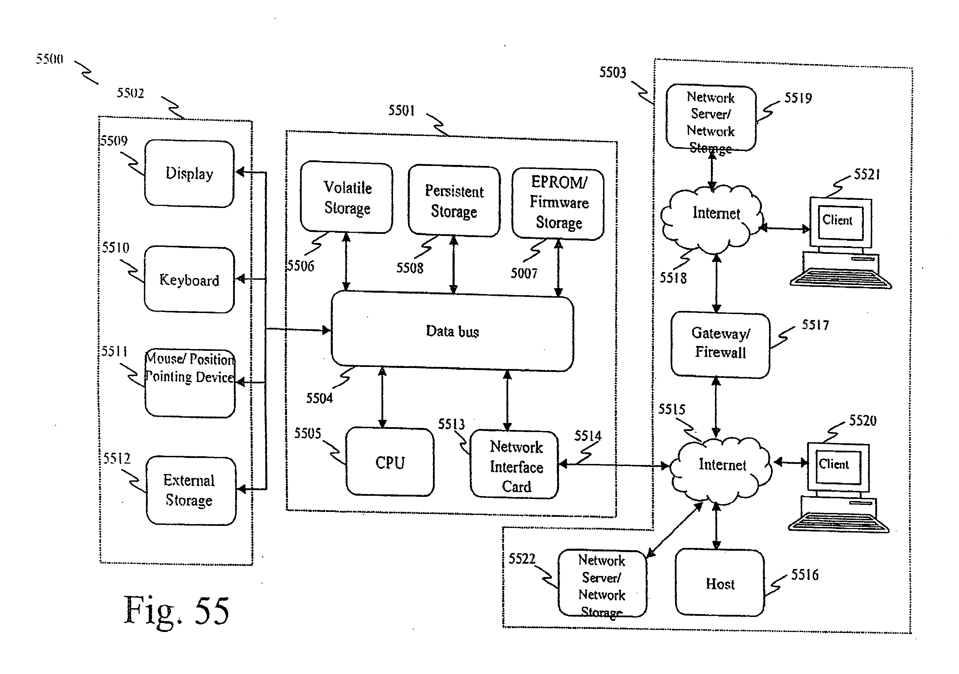

Figure 55 is a block diagram that illustrates an embodiment of a computer/server system 550 upon which an embodiment of the inventive methodology may be implemented. The system 5500 includes a computer/server platform 5501, peripheral devices 5502 and network resources 5503.

The computer platform 5501 may include a data bus 5504 or other communication mechanism for communicating information across and among various parts of the computer platform 5501, and a processor 5505 coupled with bus 5501 for processing information and performing other computational and control tasks. Computer platform 5501 also includes a volatile storage 5506, such as a random access memory (RAM) or other dynamic storage device, coupled to bus 5504 for storing various information as well as instructions to be executed by processor 5505. The volatile storage 5506 also may be used for storing temporary variables or other intermediate information during execution of instructions by processor 5505. Computer platform 5501 may further include a read only memory (ROM or EPROM) 5507 or other static storage device coupled to bus 5504 for storing static information and instructions for processor 5505, such as basic input-output system (BIOS), as well as various system configuration parameters. A persistent storage device 5508, such as a magnetic disk, optical disk, or solid-state flash memory device is provided and coupled to bus 5501 for storing information and instructions.

Computer platform 5501 may be coupled via bus 5504 to a display 5509, such as a cathode ray tube (CRT), plasma display, or a liquid crystal display (LCD), for displaying information to a system administrator or user of the computer platform 5501. An input device 5510, including alphanumeric and other keys, is coupled to bus 5501 for communicating information and command selections to processor 5505. Another type of user input device is cursor control device 5511, such as a mouse, a trackball, or cursor direction keys for communicating direction information and command selections to processor 5504 and for controlling cursor movement on display 5509. This input device typically has two degrees of freedom in two axes, a first axis (e.g., x) and a second axis (e.g., y), that allows the device to specify positions in a plane.

An external storage device 5512 may be connected to the computer platform 5501 via bus 5504 to provide an extra or removable storage capacity for the computer platform 5501. In an embodiment of the computer system 5500, the external removable storage device 5512 may be used to facilitate exchange of data with other computer systems.

The invention is related to the use of computer system 5500 for implementing the techniques described herein. In an embodiment, the inventive system may reside on a machine such as computer platform 5501. According to one embodiment of the invention, the techniques described herein are performed by computer system 5500 in response to processor 5505 executing one or more sequences of one or more instructions contained in the volatile memory 5506. Such instructions may be read into volatile memory 5506 from another computer-readable medium, such as persistent storage device 5508. Execution of the sequences of instructions contained in the volatile memory 5506 causes processor 5505 to perform the process steps described herein. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 5505 for execution. The computer-readable medium is just one example of a machine-readable medium, which may carry instructions for implementing any of the methods and/or techniques described herein. Such a medium may take many forms, including but not limited to, non-volatile media, volatile media, and transmission media. Non-volatile media includes, for example, optical or magnetic disks, such as storage device 5508. Volatile media includes dynamic memory, such as volatile storage 5506. Transmission media includes coaxial cables, copper wire and fiber optics, including the wires that comprise data bus 5504. Transmission media can also take the from of acoustic or light waves, such as those generated during radio-wave and infra-red data communications.

Common forms of computer-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, an EPROM, a FLASH-EPROM, a flash drive, a memory card, any other memory chip or cartridge, a carrier wave as described hereinafter, or any other medium from which a computer can read.

Various forms of computer readable media may be involved in carrying one or more sequences of one or more instructions to processor 5505 for execution. For example, the instructions may initially be carried on a magnetic disk from a remote computer. Alternatively, a remote computer can load the instructions into its dynamic memory and send the instructions over a telephone line using a modem. A modem local to computer system 5500 can receive the data on the telephone line and use an infra-red transmitter to convert the data to an infra-red signal. An infra-red detector can receive the data carried in the infra-red signal and appropriate circuitry can place the data on the data bus 5504. The bus 5504 carries the data to the volatile storage 5506, from which processor 5505 retrieves and executes the instructions. The instructions received by the volatile memory 5506 may optionally be stored on persistent storage device 5508 either before or after execution by processor 5505. The instructions may also be downloaded into the computer platform 5501 via Internet using a variety of network data communication protocols well known in the art.

The computer platform 5501 also includes a communication interface, such as network interface card 5513 coupled to the data bus 5504. Communication interface 5513 provides a two-way data communication coupling to a network link 5514 that is connected to a local network 5515. For example, communication interface 5513 may be an integrated services digital network (ISDN) card or a modem to provide a data communication connection to a corresponding type of telephone line. As another example, communication interface 5513 may be a local area network interface card (LAN NIC) to provide a data communication connection to a compatible LAN. Wireless links, such as well-known 802.11a, 802.11b, 802.11g and Bluetooth may also used for network implementation. In any such implementation, communication interface 5513 sends and receives electrical, electromagnetic or optical signals that carry digital data streams representing various types of information.

Network link 5513 typically provides data communication through one or more networks to other network resources. For example, network link 5514 may provide a connection through local network 5515 to a host computer 5516, or a network storage/server 5517. Additionally or alternatively, the network link 5513 may connect through gateway/firewall 5517 to the wide-area or global network 5518, such as an Internet. Thus, the computer platform 5501 can access network resources located anywhere on the Internet 5518, such as a remote network storage/server 5519. On the other hand, the computer platform 5501 may also be accessed by clients located anywhere on the local area network 5515 and/or the Internet 5518. The network clients 5520 and 5521 may themselves be implemented based on the computer platform similar to the platform 5501.

Local network 5515 and the Internet 5518 both use electrical, electromagnetic or optical signals that carry digital data streams. The signals through the various networks and the signals on network link 5514 and through communication interface 5513, which carry the digital data to and from computer platform 5501, are exemplary forms of carrier waves transporting the information.

Computer platform 5501 can send messages and receive data, including program code, through the variety of network(s) including Internet 5518 and LAN 5515, network link 5514 and communication interface 5513. In the Internet example, when the system 5501 acts as a network server, it might transmit a requested code or data for an application program running on client(s) 5520 and/or 5521 through Internet 5518, gateway/firewall 5517, local area network 5515 and communication interface 5513. Similarly, it may receive code from other network resources.

The received code may be executed by processor 5505 as it is received, and/or stored in persistent or volatile storage devices 5508 and 5506, respectively, or other non-volatile storage for later execution. In this manner, computer system 5501 may obtain application code in the from of a carrier wave.

It should be noted that the present invention is not limited to any specific firewall system. The inventive policy-based content processing system may be used in any of the three firewall operating modes and specifically NAT, routed and transparent.

Finally, it should be understood that processes and techniques described herein are not inherently related to any particular apparatus and may be implemented by any suitable combination of components. Further, various types of general purpose devices may be used in accordance with the teachings described herein. It may also prove advantageous to construct specialized apparatus to perform the method steps described herein. The present invention has been described in relation to particular examples, which are intended in all respects to be illustrative rather than restrictive. Those skilled in the art will appreciate that many different combinations of hardware, software, and firmware will be suitable for practicing the present invention. For example, the described software may be implemented in a wide variety of programming or scripting languages, such as Assembler, C/C++, Perl, shell, PHP, Java, etc.

Moreover, other implementations of the invention will be apparent to those skilled in the art from consideration of the specification and practice of the invention disclosed herein. Various aspects and/or components of the described embodiments may be used singly or in any combination in a computerized storage system with thin-provisioning functionality. It is intended that the specification and examples be considered as exemplary only, with a true scope of the invention being indicated by the following claims.

## Claims

1. A computerized data storage system comprising:
a. at least one external volume,
b. two or more storage subsystems comprising a first storage subsystem and a second storage subsystem, the first storage subsystem comprising a first virtual volume and the second storage subsystem comprising a second virtual volume, the first virtual volume and the second virtual volume forming a pair, wherein:
i. the first virtual volume and the second virtual volume are thin provisioning volumes;
ii. the first virtual volume is operable to allocate a capacity from a first capacity pool associated with the first virtual volume;
iii. the second virtual volume is operable to allocate the capacity from a second capacity pool associated with the second virtual volume; and
iv. the capacity comprises the at least one external volume;
v. the at least one external volume is shared by the first capacity pool and the second capacity pool;
vi. the at least one external volume, the first storage subsystem or the second storage subsystem stores at least one thin provisioning information table;
vii. upon execution of a thin provisioning allocation process, if the first storage subsystem has already allocated the capacity from the shared at least one external volume, the second storage subsystem is operable to refer to allocation information and establish a relationship between a virtual volume address and a capacity pool address.

2. The computerized data storage system of claim 1, wherein each of the two or more storage subsystems comprises:
a storage controller having a controller memory and a controller CPU;
a disk unit having zero or more of the hard disks being grouped in RAID groups; and
a management terminal,
wherein each of the hard disks and the external volume comprise capacity pool pages,
wherein zero or more of the capacity pool pages of a first RAID group form a capacity pool chunk,
wherein the virtual volume comprises virtual volume slots, one or more of the virtual volume slots forming a virtual volume page, and
wherein the cache area comprises cache slots.

3. The computerized data storage system of claim 2, wherein the controller memory stores:
a volume operation program;
an I/O program;
a disk access program;
a capacity pool management program;
a slot operation program;
a virtual volume management table;
a capacity pool management table;
a capacity pool element management table;
a capacity pool page management table;
a cache management table; and
a pair management table; and
wherein the cache area is included in the controller memory for storing data.

4. The computerized data storage system of claim 3, wherein the volume operation waiting program comprises:
determining whether the controller CPU has received a volume operation request, the volume operation request comprising a pair create request and a pair delete request,
if the controller CPU has received a volume operation request, determining whether received request is a pair create request or a pair delete request,
if the pair create request has been received, executing the pair create program, and
if the pair delete request has been received, executing the pair delete program,
wherein a sender of the pair create request or the pair delete request is the host computer or the management terminal of one of the storage subsystems.

5. The computerized data storage system of claim 4, wherein the pair create program comprises:
determining whether a designated virtual volume on the first storage subsystem has been paired with another virtual volume on the second storage subsystem;
if the designated virtual volume has not been paired, determining a status of the designated virtual volume as a master or a slave;
if the designated virtual volume is the master, sending the pair create request to the second storage subsystem and if the second storage subsystem accepts the request, pairing the designated virtual volume as the master and one of the virtual volumes in the second storage subsystem as the slave, according to the pair management table, and sending a done message to the sender of the pair create request; and
if the status of the designated virtual volume is determined as the slave, pairing the designated virtual volume as the slave and one of the virtual volumes on the second storage subsystem as the master, according to the pair management table, and sending an OK message to the master virtual volume.

6. The computerized data storage system of claim 4, wherein the pair delete program comprises:
determining whether a pairing relationship exists between a designated virtual volume on the first storage subsystem with another virtual volume on the second storage subsystem, forming a pair, by referring to the pair management table;
if the pair is found, determining a status of the designated virtual volume as a master or a slave;
if the designated virtual volume is the master, sending a pair delete request to the second storage subsystem comprising the slave and requesting a release of the pairing relationship, receiving an acknowledgment message regarding the release of the pairing relationship, and removing the pairing relationship from the pair management table and sending a done message to a requestor; and
if the designated virtual volume is the slave, removing the pairing relationship from the pair management table and sending an acknowledgment message to the master.

7. The computerized data storage system of claim 3,
wherein the slot operation program is operable to lock the cache slot responsive to a slot lock request by writing a lock status to the cache management table, if a status of the cache slot in the cache management table is not already set to lock, and
wherein the slot operation program is operable to unlock the cache slot responsive to a slot unlock request by writing an unlock status to the cache management table.

8. The computerized data storage system of claim 3, wherein the capacity pool page allocation program of the capacity pool management program is operable to:
if a referenced capacity pool page belongs to a slave virtual volume, request a corresponding master capacity pool page from the storage subsystem including a corresponding master virtual volume, and if the master capacity pool page is not related to the external volume, relate the master capacity pool page to the external volume; and
if the referenced capacity pool page belongs to a master virtual volume or for the master capacity pool page of the referenced capacity pool page belonging to the slave virtual volume, the master capacity pool page not being related to the external volume, obtain a free capacity pool page in a capacity pool chunk related to the master virtual volume, or obtain a new capacity pool chunk if no related capacity pool chunk is found and allocate a new capacity pool page in an external volume related to the capacity pool chunk.

9. The computerized data storage system of claim 3, wherein the cache destaging program is operable to:
for a master virtual volume including a cache slot having the data, identify or allocate a capacity pool page related to the cache slot and transfer the data from the cache slot to the hard disk having the capacity pool page;
for a slave virtual volume including the cache slot and not being related to a capacity pool page, identify the capacity pool page allocated to a paired master virtual volume, the paired master virtual volume being paired with the slave virtual volume; and
for a slave virtual volume including the cache slot and being related to a capacity pool page, transfer the data from the cache slot to the hard disk if a corresponding cache slot on a paired master virtual volume is dirty and change a status of the slave virtual volume to clean if the corresponding cache slot on the paired master volume is clean.

10. A computer-implemented method for data storage using a host computer coupled to two or more storage subsystems, the two or more storage subsystems coupled together and to an external storage volume, each of the storage subsystems comprising a cache area, each of the storage subsystems comprising at least one virtual volume and at least one capacity pool, the at least one virtual volume being allocated from the at least one capacity pool, the at least one capacity pool comprising at least a portion of the external storage volume, wherein the at least one virtual volume is a thin provisioning volume, the method comprising:
pairing a first virtual volume of a first storage subsystem of the two or more storage subsystems and a second virtual volume of a second storage subsystem of the two or more storage subsystems as a master volume and a slave volume; and
upon receipt of a request from the first storage subsystem, preventing at least one of the storage elements of the at least one capacity pool of the second storage subsystem from being allocated to the second virtual volume.

11. The computer-implemented method of claim 10, further comprising copying a write I/O operation from the host computer to the master volume, the copying comprising:
receiving a write I/O request and write data at the master storage subsystem;
storing the write data in the cache slots of the master storage subsystem;
replicating the write I/O request and the write data to the slave storage subsystem;
storing the write data in the cache slots of the slave storage subsystem;
returning an acknowledgement of completion of the write I/O request from the slave storage subsystem to the master storage subsystem; and
sending the acknowledgement from the master storage subsystem to the host computer.

12. The computer-implemented method of claim 10, further comprising copying a write I/O operation from the host computer to the slave volume, the copying comprising:
receiving a write I/O request and write data at the slave storage subsystem;
replicating the write I/O request and the write data to the master storage subsystem;
storing the write data in the cache slots of the master storage subsystem;
returning an acknowledgement of completion of the write I/O request from the master storage subsystem to the slave storage subsystem;
storing the write data in the cache slots of the slave storage subsystem; and
sending the acknowledgement from the slave storage subsystem to the host computer.

13. The computer-implemented method of claim 10, further comprising destaging the data to the external volume from the master volume, the destaging comprising:
finding a dirty cache slot at the master storage subsystem in a capacity pool page of an unallocated virtual volume;
obtaining a new capacity pool chunk belonging to the external volume;
sending a page release request to the slave storage subsystem;
searching and omitting a shared capacity pool chunk including the capacity pool page at the slave storage subsystem;
sending an acknowledgement of completion of the page release request from the slave storage subsystem to the master storage subsystem;
allocating a new capacity pool page to the unallocated virtual volume at the master storage subsystem from the new capacity pool chunk belonging to the external volume;
transferring the data in the dirty cache slot to the external volume;
receiving acknowledgement of completion of the transfer from the external volume at the master storage subsystem; and
changing status of the dirty cache slot from dirty to clean at the master storage subsystem.

14. The computer-implemented method of claim 10, further comprising destaging the data to the external volume from the slave volume, the destaging comprising:
finding a dirty cache slot at the slave storage subsystem, the dirty cache slot corresponding to an unallocated capacity pool page at the slave storage subsystem, the unallocated capacity pool page not being allocated to the slave virtual volume;
requesting allocation status of the unallocated capacity pool page from the master storage subsystem;
obtaining a relationship between the unallocated capacity pool page and the master virtual volume at the master storage subsystem and sending the relationship to the slave storage subsystem;
at the slave storage subsystem, allocating the unallocated capacity pool page to the slave virtual volume;
sending a lock request from the slave storage subsystem to the master storage subsystem;
receiving the lock request at the master storage subsystem and locking a target cache slot at the master storage subsystem corresponding to the dirty cache slot at the slave storage subsystem;
returning an acknowledgement of completion of the lock request to the slave storage subsystem;
transferring the data in the dirty cache slot from the slave storage subsystem to the external volume if the slot status of the target cache slot at the master virtual volume is dirty;
receiving acknowledgement of the data transfer from the external volume at the slave virtual volume; and
changing the slot status of the dirty cache slot from dirty to clean at the slave storage subsystem.

15. A computer-readable medium embodying one or more sequences of instructions, which, when executed by one or more processors, cause the one or more processors to perform a computer-implemented method for data storage according to any of the claims 10 to 14, using a host computer coupled to two or more storage subsystems, the two or more storage subsystems coupled together and to an external storage volume, each of the storage subsystems comprising a cache area, each of the storage subsystems comprising at least one virtual volume and at least one capacity pool, the at least one virtual volume being allocated from the at least one capacity pool, the at least one capacity pool comprising at least a portion of the external storage volume, wherein the at least one virtual volume is a thin provisioning volume.
